# EUROPEAN PATENT APPLICATION

(11) **EP 4 730 114 A1**
(43) Date of publication of application: **22.04.2026**
(21) Application number: 25207196.4
(22) Date of filing: 07.10.2025
(51) Int. Cl.: G06F 8/71

(54) **DEVELOPMENT ENVIRONMENT COMPOSITION AND GENERATION**

(30) Priority: 16.10.2024 US 202418917190
(71) Applicant: Microsoft Technology Licensing, LLC, Redmond, WA 98052-6399 (US)
(72) Inventor: Obando Chacon, German David, Redmond, WA 98052 (US); Ellwanger, Dayton Ross, Redmond, WA 98052 (US); Muttaraju, Dhruv Chand, Redmond, WA 98052 (US); Tian, Lei, Redmond, WA 98052 (US)
(74) Representative: Grünecker Patent- und Rechtsanwälte PartG mbB

(57) **Abstract**

Some embodiments determine digital content to compose a software development environment and generate an executable image accordingly. In examples this includes obtaining a code artifact identification of a software repository, commit level, project, file extension, library, package, source code pattern, textual description, or other code artifact, and getting development environment component identifications which identify respective components, such as a software development tool, tool setting, tool extension, tool extension setting, security key or token or secret, runtime, kernel, driver, shell, or environment variable. These embodiments acquire correlation values that are calculated from historic data about artifact-component relationships. In response to results of comparing correlation values to thresholds, embodiments place components in a deployment set as default components of the environment being composed. Then these embodiments generate a deployable development environment executable image from at least the deployment set.

## Description

### BACKGROUND

Many modern devices in a broad range of fields have some form of computing power, and operate according to software instructions that execute using that computing power. A few of the many examples of devices whose behavior depends on software include cars, planes, ships and other vehicles, robotic manufacturing tools and other industrial systems, medical devices, cameras, inventory management and other retail or wholesale systems, smartphones, tablets, servers, workstations and other devices which connect to the Internet.

The firmware, operating systems, applications and other software programs which guide various behaviors of these and many other computing devices are developed by people who are known as developers, programmers, engineers, or coders, for example; they are referred to collectively here as "developers". As they develop software, developers interact with software code and other digital resources, and with source code editors, compilers, debuggers, profilers, version control tools, and various other software development tools in a development environment.

The development environment typically includes software that runs on one or more virtual machines, e.g., in a cloud, or on one or more local physical machines, e.g., laptops or workstations, or on both virtual and local physical machines. The development environment also includes or accesses resources, e.g., source code, databases, images, interfaces, credentials, repositories, and more. The development environment also often includes configuration values known generally as settings, e.g., environment variables, search paths, security permissions, user preferences, compiler flags, and more.

Terminology varies, but the process of providing a machine equipped with a development environment is often described as deploying or provisioning the machine. Configuring the machine is at least part of deploying or provisioning it. Depending on the situation, configuring a machine sometimes includes installing software on the machine (also referred to as deploying the software to the machine) or verifying that particular software is installed, installing (deploying) resources or verifying that particular resources are installed (deployed) or otherwise accessible for use in the environment, assigning values to settings or confirming that particular setting values have been assigned, or a mixture of the foregoing.

Billions of machines of various kinds, including many configured with development environments, have been deployed over the course of several decades. However, improvements in machine deployment technology and software deployment technology are still possible.

### SUMMARY

Some embodiments address technical challenges arising in software development environment composition and generation. A recurring challenge is how to improve development environment composition and generation by technical mechanisms, as opposed to mere administrative choices. Technical improvements offer benefits which administrative choices lack, such as greater scalability across multiple computing systems, speed, security, privacy, reliable reproducibility, and efficient computational resource usage. A particular challenge is how to optimally control the technical process of composing a development environment from relatively few components in a very large space of available potential components. Another challenge is how to optimize user interaction with a computing system while that system is performing development environment composition and generation. Other technical challenges are also addressed herein.

Some embodiments taught herein provide or utilize computing system technology which composes a software development environment and generates an executable image accordingly. One example embodiment obtains a code artifact identification which identifies a code artifact, e.g., a software repository, commit level, project, file extension, library, package, source code pattern, or textual description. The example embodiment also gets a set of development environment component identifications which identify respective development environment components, such as a software development tool, tool setting, tool extension, tool extension setting, security key or token or secret, runtime, kernel, driver, shell, or environment variable.

For each of multiple development environment component identifications, the embodiment acquires a correlation value which is calculated from historic data. Some historic data includes component inclusion historic data which records the frequency of an inclusion of the respective development environment component together with the code artifact in one or more historic software development environments. Some historic data includes component option response historic data which records the frequency of a user response to an option of inclusion of the respective development environment component with the code artifact in one or more historic software development environments.

In response to at least the correlation values, the example embodiment places one or more development environment component identifications in a deployment set as default components of the environment being composed. Each of the placed development environment component identifications has a respective correlation value above an upper threshold; potential components whose respective correlation values are below the upper threshold are not placed by default in the deployment set. Then the example embodiment generates a development environment executable image from at least the deployment set. The development environment executable image includes development environment components which have development environment component identifications in the deployment set. The resulting executable image is deployable for execution on a local machine or a cloud computing system, for example.

Additional technical activities, technical characteristics, and technical benefits pertinent to teachings herein will also become apparent to those of skill in the art. The examples given are merely illustrative. This Summary is not intended to identify key features or essential features of the claimed subject matter, nor is it intended to be used to limit the scope of the claimed subject matter. Rather, this Summary is provided to introduce - in a simplified form - some technical concepts that are further described below in the Detailed Description. Subject matter scope is defined with claims as properly understood, and to the extent this Summary conflicts with the claims, the claims should prevail.

### BRIEF DESCRIPTION OF THE DRAWINGS

A more particular description will be given with reference to the attached drawings. These drawings only illustrate selected aspects and thus do not fully determine coverage or scope.
Figure 1 is a diagram illustrating aspects of computer systems and also illustrating configured storage media, including some aspects generally suitable for embodiments which include or use development environment provisioning (DEP) functionality, which includes at least functionality to compose a software development environment;
Figure 2 is a block diagram illustrating aspects of a family of enhanced computing systems which are each configured with DEP functionality;
Figure 3 is a data flow diagram illustrating some aspects of DEP functionality in an example enhanced computing system;
Figure 4 is a block diagram illustrating some aspects and examples of some code artifacts in a computing system;
Figure 5 is a block diagram illustrating some aspects and examples of some components which are suitable for inclusion in a software development environment in some scenarios;
Figure 6 is a block diagram illustrating some aspects of some software development environments in a computing system;
Figure 7 is a block diagram illustrating some aspects and examples of commands that are available to a user in some computing systems;
Figure 8 is a block diagram illustrating some aspects and examples of historic data regarding software development environments;
Figure 9 is a block diagram illustrating some additional aspects of some computing systems;
Figure 10 is a flowchart illustrating some DEP methods, including placement of at least one component in a deployment set for inclusion by default in an executable image of a software development environment, in response to comparison of a threshold to a correlation value computed from historic data;
Figure 11 is another flowchart illustrating some DEP methods, including calculation of a correlation value from historic data;
Figure 12 is another flowchart illustrating some DEP methods, including correlation-value-threshold-guided population of the deployment set through inclusion of at least one component in the deployment set or exclusion of at least one component from the deployment set;
Figure 13 is another flowchart illustrating some DEP methods, including an enhanced computing system execution path in which a membership command supplements or overrides correlation-value-threshold-guided population of the deployment set;
Figure 14 is a flowchart further illustrating DEP methods, and incorporating as options the steps of Figures 2, 3, 10-13, and other steps discussed herein; and
Figure 15 is a plot illustrating aspects of determination of a threshold which is used during correlation-value-threshold-guided population of the deployment set in some DEP methods.

### DETAILED DESCRIPTION

### Overview

Some teachings described herein were motivated by technical challenges faced and insights gained during efforts to improve Microsoft Dev Box, which is a tool that provides development environments known as "dev boxes". Dev Box and similar tools for providing development environments are sometimes referred to as providing "preconfigured", "easy to configure", "ready-to-code", or "dev-optimized" environments. These challenges and insights provided some motivations, but the teachings herein are not limited in their scope or applicability to these particular tools, motivational challenges, solutions, or insights.

Software developers perform much of their work in a software development environment, which includes tools (editors, compilers, etc.) and other resources (source code, software libraries, network access, etc.). Some software development environments are better suited to a particular software development effort than others. For example, many of the tools and resources that are well suited for developing machine learning models are unlikely to help much in the development of a graphical user interface to a remote-controlled model airplane. Also, different developers also have different preferences or requirements, which stem from factors such as their experience with particular tools or particular tool settings, recommendations provided by other developers, organization policies, technical requirements such as functionality to process a particular programming language or execute in a particular runtime environment, or other factors which govern or influence choices about software development environment content.

In many software development scenarios, most of the human attention, computational resources, and development efforts are focused on some piece of software which is to be developed using the development environment. As a result, provisioning the development environment is sometimes seen as a necessary inconvenience, not as a development project in its own right. Provisioning a development environment is not infrequently viewed as a burden to finish quickly, on the way to the "real" work of software development.

One approach to provisioning a development environment is known colloquially as a "kitchen sink" or "everything but the kitchen sink" approach. In this approach, the development environment is provisioned to include many tools and other components merely because they are (or were) available for use in some kind of software development effort, or because they are in a particular broad category such as "editors", "compilers", "debuggers", etc.

A rationale for the kitchen sink approach is that if a developer wants a particular tool as part of a particular development project, then the kitchen sink development environment is likely to include that tool (and to also include several alternatives to it). Another rationale is that the kitchen sink approach reduces human administrator burdens, since an administrator who is responsible for provisioning development environments on request can simply deploy (or have the requesting developer deploy) a copy of the same development environment in response to every request.

A disadvantage of the kitchen sink approach is that computational resources (e.g., bandwidth, storage, processor cycles, electricity) are spent processing components that are included as part of the kitchen sink development environment but are not then used in a given development effort. For example, in some cases the kitchen sink development environment includes two or more integrated development environment tools, only one of which will be used. Which particular components go unused depends on the particular development effort, but in each effort numerous components of the development environment are not used, so the computational resources spent on them for that effort were wasted.

Another approach to provisioning a development environment is known colloquially as a "from scratch" or "build from scratch" approach. In this approach, a developer incrementally builds the development environment, e.g., by selecting a source code editor, a compiler, a package manager, and other development tools, selecting an operating system or kernel, and making other component selections. Under this approach, selections made by the developer largely or entirely determine which components are included in the environment.

A rationale for the build from scratch approach is that if the developer wants a particular tool for the particular development effort, then a development environment built from scratch by the developer will include that tool, unless the developer is unable to locate and download the tool. Another rationale is that administrator burdens are reduced, because the developer rather than the administrator primarily or solely decides what to include in the development environment. Of course, developer burdens are increased by the build from scratch approach. Another rationale is that, unlike the kitchen sink approach, the build from scratch approach does not spend substantial computational resources on unwanted or unnecessary components.

Some embodiments taught herein take a different approach, which involves using historic data and deployment set thresholds to determine the composition of a development environment. These are referred to herein as development environment provisioning (DEP) embodiments. A DEP approach as taught herein provides the benefits of scalability and low administrator burden, similar to the kitchen sink approach, without wasting computational resources on numerous components that will not be used in a given development effort. The DEP approach also customizes the development environment to the particular development effort, like the build from scratch approach does, but imposes a much smaller burden - in some cases essentially no burden - on the developer to make component selections, locate components, download them, and install them in the development environment.

Some embodiments described herein utilize or provide a DEP method for composing a software development environment. The DEP method is performed by a computing system. These example method embodiments include: obtaining a code artifact identification which identifies a code artifact; getting a nonempty set of development environment component identifications which identify respective development environment components; for each of a plurality of the development environment component identifications, acquiring a correlation value which is calculated from at least one of: component inclusion historic data of the frequency of an inclusion of the respective development environment component with the code artifact in one or more software development environments, or component option response historic data of the frequency of a response to an option of inclusion of the respective development environment component with the code artifact in one or more software development environments; placing in a deployment set each development environment component identification which has a respective correlation value above an upper threshold, in response to ascertaining that the respective correlation value is above the upper threshold, thereby forming a nonempty deployment set; and generating a development environment executable image from at least the deployment set, the development environment executable image including multiple development environment components which have development environment component identifications in the deployment set.

This DEP functionality has a technical benefit of scalability because it is largely or entirely independent of interaction with a developer, an administrator, or another human user while it composes the development environment. Unlike the build from scratch approach, the DEP approach does not depend on user interaction to select development environment components. This reduced reliance on human input also improves the usability of executable image composition tools that implement a DEP approach. Instead of human interaction, this DEP approach utilizes computing system comparisons of a threshold to correlation values that are derived from the historic data. Two kinds of historic data are defined; a given embodiment may utilize either or both kinds. These computations do not necessarily yield the same results for different development environments, but they can be performed (scaled) across a wide range of development environments, development environment components, code artifacts, and development projects.

Efficient use of computational resources is another technical benefit of this DEP functionality. This efficiency is particularly evident with embodiments that also employ a lower threshold to exclude components whose correlation value is low, in a mirror capability of the embodiments that employ the upper threshold to include components whose correlation value is high. But even when only one of the thresholds is used in an embodiment, the embodiment avoids wasting computational resources on components that will likely not be used in a given development effort. Such components are either not included by default, when the upper threshold is employed, or they are actively excluded, when the lower threshold is employed. In some scenarios, the automatic inclusion or exclusion by the embodiment is overridden by a user command, but even so the embodiments will make more efficient use of computational resources than the kitchen sink approach, by avoiding the inclusion (and hence the processing) of low utility components.

In some embodiments, the computing system facilitates user input to tailor the development environment executable image to a user preference. In some scenarios this DEP functionality includes: displaying in a user interface a description of a particular development environment component whose corresponding correlation value is between a lower threshold and the upper threshold, the lower threshold being above zero and less than the upper threshold; receiving a membership command via the user interface, the membership command including an inclusion command or an exclusion command; and including or excluding the particular development environment component's identification from the deployment set according to the membership command.

This DEP functionality has a technical benefit of facilitating user input to a software development tool, namely, the tool that composes the development environment. The environment composition tool improves usability and reduces user selection entry burdens by employing the deployment set thresholds to exclude components whose correlation value is low and to include components whose correlation value is high. When a correlation value is between the lower and upper thresholds, the user makes a selection via the membership command. Some embodiments also recognize a user command that overrides a default inclusion or exclusion, but the use of correlation values and thresholds nonetheless improves usability by reducing the burden on developers to individually select each component of their development environment, without sacrificing customization capabilities, unlike the kitchen sink approach.

With regard to the thresholds, some embodiments determine that a deployment set threshold collection satisfies a statistical significance criterion in that at least one member of the deployment set threshold collection is statistically significant for at least one of: component inclusion historic data or component option response historic data. The deployment set threshold collection includes the upper threshold, the lower threshold, or both, depending on the particular embodiment. Some embodiments include additional thresholds, for finer-grained categorization of correlation values.

This DEP functionality has technical benefits of usability, scalability, and efficiency. These benefits are gained by computationally determining the threshold based on the historic data, without requiring trial-and-error-driven iterations through different human-selected threshold values to check which threshold value seems to work best to include or exclude components in a development environment. Unlike threshold value selections computed according to a statistical significance criterion, selections by a human tester would be governed by the tester's subjective judgment, and would be based on a small sample of components which are not necessarily meaningful in statistical terms.

In some embodiments, the computing system determines that the deployment set threshold collection satisfies a coverage criterion in that (a) at least a specified inclusion amount of the development environment component identifications have respective correlation values above the upper threshold, the inclusion amount being greater than zero, or (b) at least a specified nonzero exclusion amount of the development environment component identifications have respective correlation values below the lower threshold, the exclusion amount being greater than zero, or both (a) and (b).

When the inclusion amount is greater than zero, this DEP functionality has technical benefits of usability, scalability, and efficiency, gained by computationally determining the upper threshold based on the historic data and employing the upper threshold to place useful components in the development environment image without requiring human interactions. Similarly, when the exclusion amount is greater than zero, this DEP functionality has technical benefits of usability, scalability, and efficiency gained by computationally determining the lower threshold based on the historic data and employing the lower threshold to proactively and automatically avoid spending computational resources and human user effort on components that will probably not be useful in the particular development environment image.

In some embodiments, the computing system finds a dependency which specifies that a first development environment component depends on a second development environment component, detects an inclusion of the first development environment component's identification in the deployment set, and reacts to the dependency. In some scenarios, an embodiment reacts by including the second development environment component's identification in the deployment set when the second development environment component identification's correlation value is below the upper threshold. That is, the second component would not have been included on the basis of its own correlation value, but it is included because the first component depends on it. The first component is included on the basis of its own correlation value, or because another included component depends on it, or because a membership command called for its inclusion, for example. Regardless, this DEP functionality has the technical benefit of making more efficient use of computational resources, and better reliability and usability, by avoiding generation and deployment of an environment image that fails to function due to a missing component.

Some embodiments restrict at least a portion of the historic data by at least one of: anonymizing, pseudonymizing, or masking a software developer identity or a software developer organization identity of usage data from which the historic data is derived; filtering out non-public source code from usage data from which the historic data is derived; or filtering out software code which is related to non-public software libraries or related to non-public software packages from usage data from which the historic data is derived.

This DEP functionality has technical benefits of improving security and protecting privacy. In particular, security is enhanced by preventing disclosure of identity information or confidential source code or other software code information that could be used by an attacker to gain trust in a phishing campaign or another social engineering activity.

In some embodiments, all of the following are performed by the computing system within a total time period which is less than one minute long: a correlation value acquiror acquires the correlation value for each of a plurality of the development environment component identifications, a deployment set populator populates a deployment set data structure, and a development environment executable image generator generates the development environment executable image.

This DEP functionality has the technical benefit of providing the development environment executable image faster than it could be provided by approaches that require human activity such as human selection of components to include in the image, or human decisions to exclude components from the image. This DEP functionality also improves the usability of tools that compose and generate executable images of environments, since usability decreases as the length of time a user waits for images increases. One of skill will acknowledge that, as a practical matter, this DEP functionality level of performance cannot be replaced or matched by human activity. Attempts to do so would introduce delays, errors, and burdens on personnel, and would degrade the usability, scalability, and efficiency of the computing system's environment image generation solution.

Some embodiments include an image deployer which upon execution by a processor deploys the generated development environment executable image to a development environment computer. This DEP functionality has the technical benefits of improved reliability and ease of use, in comparison to relying on a human to enter a deployment command.

In some embodiments, calculating the correlation value of a particular development environment component from the historic data includes weighting at least one item of the historic data according to a relevance metric. For example, when composing an executable image for a particular developer, some embodiments effectively increase a component's correlation value when the historic data shows use of the component by the developer's own team, or their own organization, or when the component was used more recently, in contrast with use by other entities or less recent use, or both. Including a component in an environment is effectively a prediction that the component will be used during development activity in that environment. This DEP functionality has the technical benefit of tending to improve the accuracy of that prediction, and thus the effectiveness of the computing system's environment image generation solution.

These and other advantages and benefits will be apparent to one of skill from the teachings provided herein.

### Operating Environments

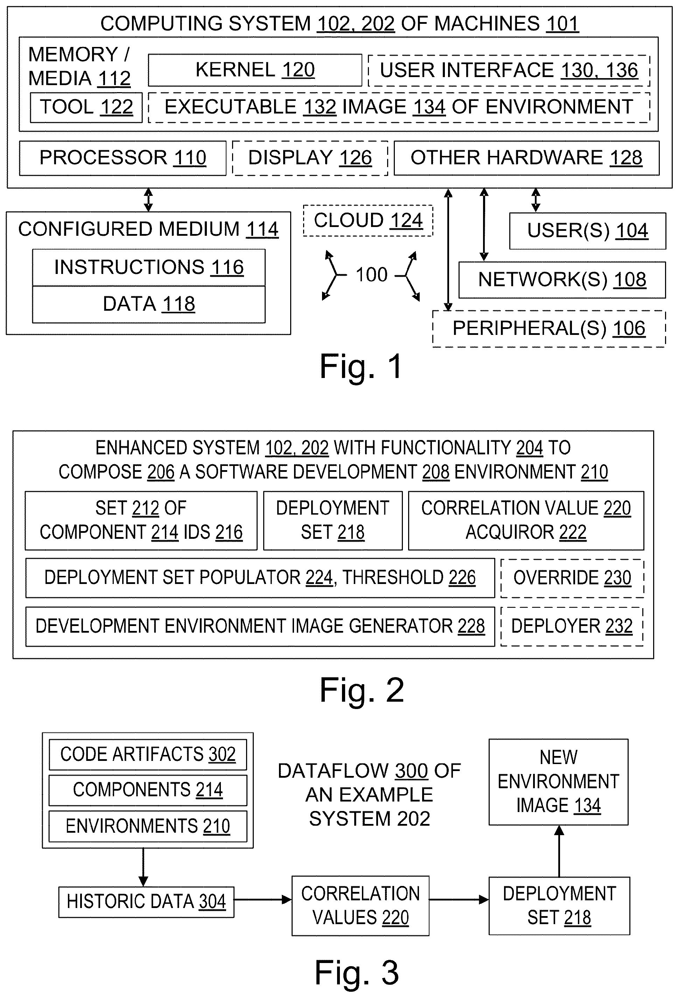

With reference to Figure 1, an operating environment 100 for an embodiment includes at least one computer system 102. The computer system 102 may be a multiprocessor computer system, or not. An operating environment may include one or more machines in a given computer system, which may be clustered, client-server networked, and/or peer-to-peer networked within a cloud 124. An individual machine is a computer system, and a network or other non-empty group of cooperating machines is also a computer system. A given computer system 102 may be configured for end-users, e.g., with applications, for administrators, as a server, as a distributed processing node, and/or in other ways.

Human users 104 sometimes interact with a computer system 102 user interface by using displays 126, keyboards 106, and other peripherals 106, via typed text, touch, voice, movement, computer vision, gestures, and/or other forms of I/O (input/output). Virtual reality or augmented reality or both functionalities are provided by a system 102 in some embodiments. A screen 126 is a removable peripheral 106 in some embodiments and is an integral part of the system 102 in some embodiments. The user interface supports interaction between an embodiment and one or more human users. In some embodiments, the user interface includes one or more of: a command line interface, a graphical user interface (GUI), natural user interface (NUI), voice command interface, or other user interface (UI) presentations, presented as distinct options or integrated.

System administrators, network administrators, cloud administrators, security analysts and other security personnel, operations personnel, developers, testers, engineers, auditors, and end-users are each a particular type of human user 104. In some embodiments, automated agents, scripts, playback software, devices, and the like running or otherwise serving on behalf of one or more humans also have user accounts, e.g., service accounts. Sometimes a user account is created or otherwise provisioned as a human user account but in practice is used primarily or solely by one or more services; such an account is a de facto service account. Although a distinction could be made, "service account" and "machine-driven account" are used interchangeably herein with no limitation to any particular vendor.

The distinction between human-driven accounts and machine-driven accounts is a different distinction than the distinction between attacker-driven accounts and non-attacker driven accounts. A particular human-driven account may be attacker-driven, or non-attacker-driven, at a given point in time. Similarly, a particular machine-driven account may be attacker-driven, or non-attacker-driven, at a given point in time.

Although for convenience, examples and claims herein sometimes speak in terms of accounts, "account" means "account or session or both" unless stated otherwise. In this disclosure, including in the claims and elsewhere, a statement about activity by "the user account or the user session" does not mean that both the user account and the user session must be present. Instead, such a statement is to be understood as a pair of corresponding but distinct statements given as alternatives, one statement being about activity by the user account, and the other statement being about activity by the user session. Likewise, a characterization of "the user account or the user session" does not mean that both the user account and the user session must be present. Instead, such a characterization is to be understood as a pair of corresponding but distinct characterizations given as alternatives, one characterizing the user account, and the other characterizing the user session.

Storage devices or networking devices or both are considered peripheral equipment in some embodiments and part of a system 102 in other embodiments, depending on their detachability from the processor 110. In some embodiments, other computer systems not shown in Figure 1 interact in technological ways with the computer system 102 or with another system embodiment using one or more connections to a cloud 124 and/or other network 108 via network interface equipment, for example.

Each computer system 102 includes at least one processor 110. The computer system 102, like other suitable systems, also includes one or more computer-readable storage media 112, also referred to as computer-readable storage devices 112. In some embodiments, tools 122 include security tools or software applications, mobile devices 102 or workstations 102 or servers 102, editors, compilers, debuggers and other software development tools, as well as APIs, browsers, or webpages and the corresponding software for protocols such as HTTPS, for example. Files, APIs, endpoints, and other resources may be accessed by an account or non-empty set of accounts, user or non-empty group of users, IP address or non-empty group of IP addresses, or other entity. Access attempts may present passwords, digital certificates, tokens or other types of authentication credentials.

Storage media 112 occurs in different physical types. Some examples of storage media 112 are volatile memory, nonvolatile memory, fixed in place media, removable media, magnetic media, optical media, solid-state media, and other types of physical durable storage media (as opposed to merely a propagated signal or mere energy). In particular, in some embodiments a configured storage medium 114 such as a portable (i.e., external) hard drive, CD, DVD, memory stick, or other removable nonvolatile memory medium becomes functionally a technological part of the computer system when inserted or otherwise installed, making its content accessible for interaction with and use by processor 110. The removable configured storage medium 114 is an example of a computer-readable storage medium 112. Some other examples of computer-readable storage media 112 include built-in RAM, ROM, hard disks (solid state or magnetic or optical), and other memory storage devices which are not readily removable by users 104. For compliance with current United States patent requirements, neither a computer-readable medium nor a computer-readable storage medium nor a computer-readable memory nor a computer-readable storage device is a signal per se or mere energy under any claim pending or granted in the United States.

The storage device 114 is configured with binary instructions 116 that are executable by a processor 110; "executable" is used in a broad sense herein to include machine code, interpretable code, and/or code that runs on a virtual machine, for example. The storage medium 114 is also configured with data 118 which is created, modified, referenced, and/or otherwise used for technical effect by execution of the instructions 116. The instructions 116 and the data 118 configure the memory or other storage medium 114 in which they reside; when that memory or other computer readable storage medium is a functional part of a given computer system, the instructions 116 and data 118 also configure that computer system. In some embodiments, a portion of the data 118 is representative of real-world items such as events manifested in the system 102 hardware, product characteristics, inventories, physical measurements, settings, images, readings, volumes, and so forth. Such data is also transformed by backup, restore, commits, aborts, reformatting, and/or other technical operations.

Although an embodiment is described as being implemented as software instructions executed by one or more processors in a computing device (e.g., general purpose computer, server, or cluster), such description is not meant to exhaust all possible embodiments. One of skill will understand that the same or similar functionality can also often be implemented, in whole or in part, directly in hardware logic, to provide the same or similar technical effects. Alternatively, or in addition to software implementation, the technical functionality described herein can be performed, at least in part, by one or more hardware logic components. For example, and without excluding other implementations, some embodiments include one of more of: chiplets, hardware logic components 110, 128 such as Field-Programmable Gate Arrays (FPGAs), Application-Specific Integrated Circuits (ASICs), Application-Specific Standard Products (ASSPs), System-on-a-Chip components, Complex Programmable Logic Devices (CPLDs), and similar components. In some embodiments, components are grouped into interacting functional modules based on their inputs, outputs, or their technical effects, for example.

In addition to processors 110 (e.g., CPUs, ALUs, FPUs, TPUs, GPUs, and/or quantum processors), memory / storage media 112, peripherals 106, and displays 126, some operating environments also include other hardware 128, such as batteries, buses, power supplies, wired and wireless network interface cards, for instance. The nouns "screen" and "display" are used interchangeably herein. In some embodiments, a display 126 includes one or more touch screens, screens responsive to input from a pen or tablet, or screens which operate solely for output. In some embodiments, peripherals 106 such as human user I/O devices (screen, keyboard, mouse, tablet, microphone, speaker, motion sensor, etc.) will be present in operable communication with one or more processors 110 and memory 112.

In some embodiments, the system includes multiple computers connected by a wired and/or wireless network 108. Networking interface equipment 128 can provide access to networks 108, using network components such as a packet-switched network interface card, a wireless transceiver, or a telephone network interface, for example, which are present in some computer systems. In some, virtualizations of networking interface equipment and other network components such as switches or routers or firewalls are also present, e.g., in a software-defined network or a sandboxed or other secure cloud computing environment. In some embodiments, one or more computers are partially or fully "air gapped" by reason of being disconnected or only intermittently connected to another networked device or remote cloud. In particular, DEP functionality 204 could be installed on an air gapped network 108 which is then updated periodically or on occasion using removable media 114, or not updated at all, depending on particular circumstances. Some embodiments also communicate technical data or technical instructions or both through direct memory access, removable or non-removable volatile or nonvolatile storage media, or other information storage-retrieval and/or transmission approaches.

One of skill will appreciate that the foregoing aspects and other aspects presented herein under "Operating Environments" form part of some embodiments. This document's headings are not intended to provide a strict classification of features into embodiment and non-embodiment feature sets.

One or more items are shown in outline form in the Figures, or listed inside parentheses, to emphasize that they are not necessarily part of the illustrated operating environment or all embodiments, but interoperate with items in an operating environment or some embodiments as discussed herein. It does not follow that any items which are not in outline or parenthetical form are necessarily required, in any Figure or any embodiment. In particular, Figure 1 is provided for convenience; inclusion of an item in Figure 1 does not imply that the item, or the described use of the item, was known prior to the current disclosure.

In any later application that claims priority to the current application, reference numerals may be added to designate items disclosed in the current application. Such items may include, e.g., software, hardware, steps, processes, systems, functionalities, mechanisms, devices, data structures, kinds of data, settings, parameters, components, computational resources, programming languages, tools, workflows, or algorithm implementations, or other items in a computing environment, which are disclosed herein but not associated with a particular reference numeral herein. Corresponding drawings may also be added.

### More About Systems

Figure 2 illustrates a computing system 102 configured by one or more of the DEP functionality enhancements taught herein, resulting in an enhanced system 202. In some embodiments, this enhanced system 202 includes a single machine, a local network of machines, machines in a particular building, machines used by a particular entity, machines in a particular datacenter, machines in a particular cloud, or another computing environment 100 that is suitably enhanced as taught herein.

Figure 3 shows some aspects of a dataflow 300 in some enhanced computing systems 202.

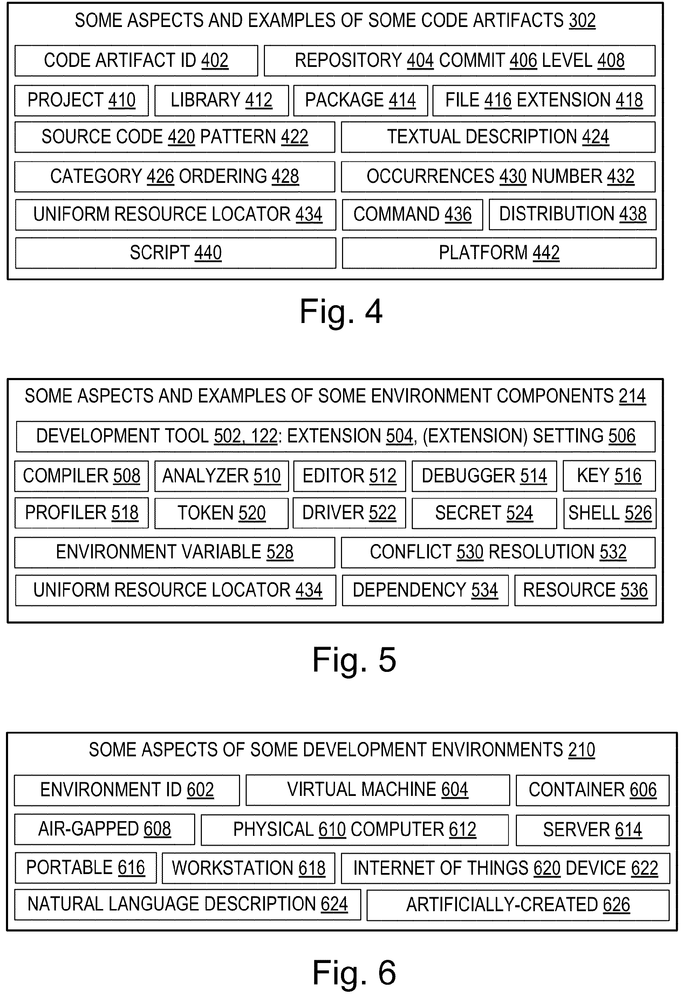

Figure 4 shows some aspects and examples of some code artifacts in a computing system.

Figure 5 shows some aspects and examples of some components which are suitable for inclusion in a software development environment in some scenarios.

Figure 6 shows some aspects of some software development environments in a computing system.

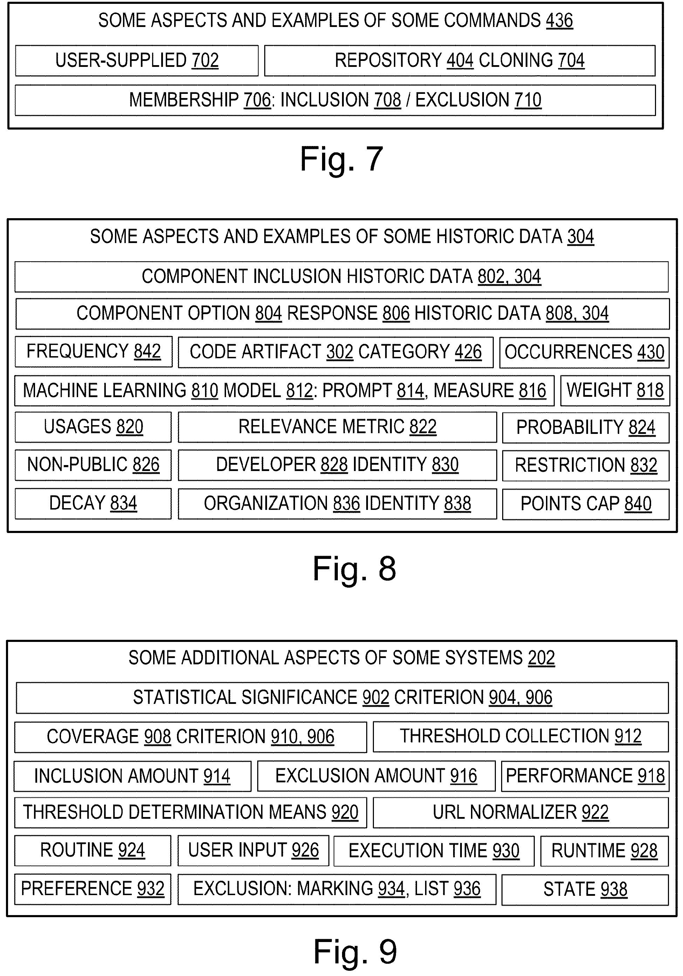

Figure 7 shows some aspects and examples of commands that are available to a user in some computing systems.

Figure 8 shows some aspects and examples of historic data regarding software development environments.

Figure 9 shows some additional aspects of some computing systems.

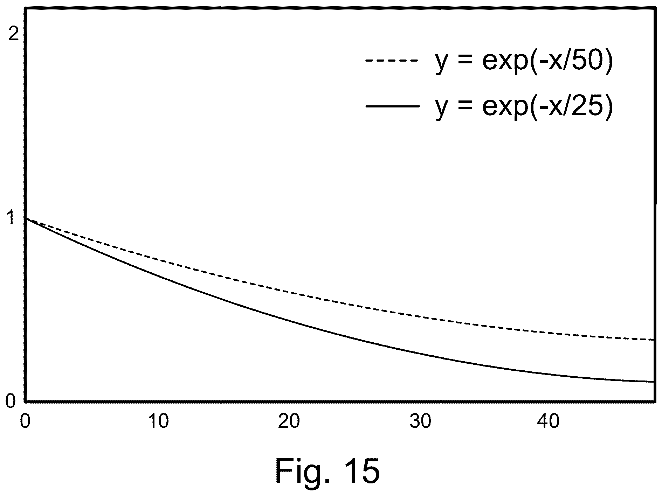

Figure 15 shows a plot of some example curves used in a computing system 202 during the system's proactive automatic determination of a threshold 226, in some example systems 202. The threshold is used in some DEP methods 1400 during correlation-value-threshold-guided population 1302 of a deployment set 218.

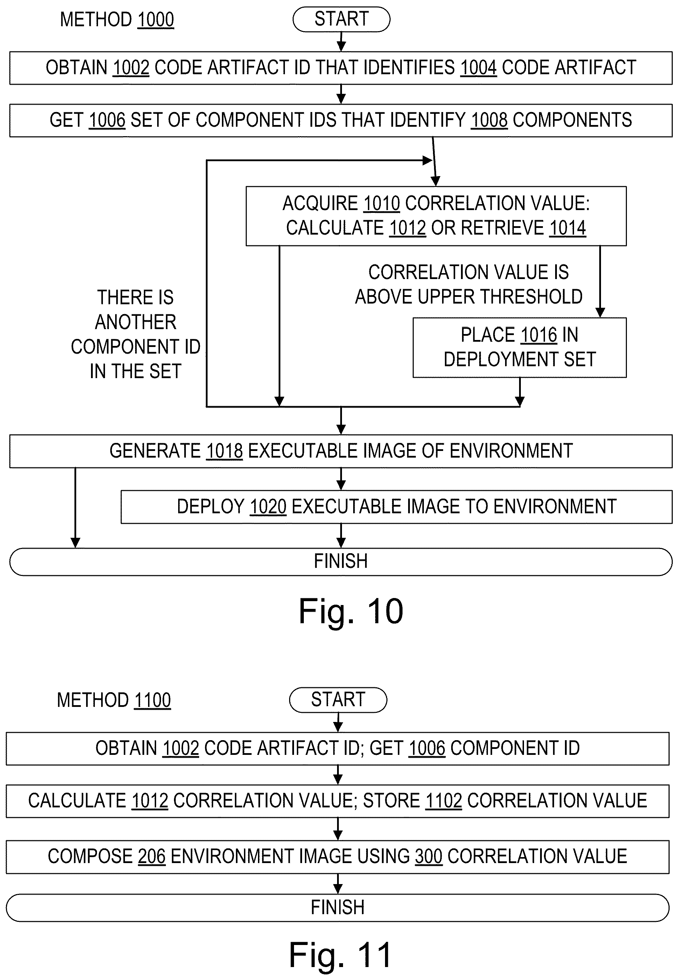

The other figures are also relevant to systems 202. Figures 10-14 are flowcharts which illustrate some methods of DEP functionality 204 operation in some systems 202.

Items shown in Figures 1-15 are discussed at various points herein. Figures 1-15 do not individually or collectively or in any subset fully define a comprehensive summary of all aspects of enhanced systems 202 or all aspects of DEP functionality 204. Nor is any figure of the Figures 1-15 or any group of figures of the Figures 1-15 by itself a comprehensive summary of all aspects of an environment 100 or another context of an enhanced system 202.

In some embodiments, the enhanced system 202 is networked through an interface 128. In some, an interface 128 includes hardware such as network interface cards, software such as network stacks, APIs, or sockets, combination items such as network connections, or a combination thereof.

Some embodiments include a computing system 202 which is configured to utilize or provide DEP functionality 204. The system 202 includes a digital memory set 112 including at least one digital memory 112, and a processor set 110 including at least one processor 110. The processor set is in operable communication with the digital memory set. A digital memory set is a set which includes at least one digital memory 112, also referred to as a memory 112. The word "digital" is used to emphasize that the memory 112 is part of a computing system 102, not a human person's memory. The word "set" is used to emphasize that the memory 112 is not necessarily in a single contiguous block or of a single kind, e.g., a memory 112 may include hard drive memory as well as volatile RAM, and may include memories that are physically located on different machines 101, but "memory" without set also includes systems with multiple memories. Similarly, the phrase "processor set" is used to emphasize that a processor 110 is not necessarily confined to a single chip or a single machine 101, but "processor" without set also includes systems with multiple processors.

All sets herein are non-empty unless described otherwise.

In this example, a computing system 202 configured for composing 206 a software development environment includes at least one processor 110, which is in operable communication with at least one digital memory 112. The at least one digital memory includes volatile storage and non-volatile storage unless indicated otherwise.

The digital memory 112 in this example contains one or more data structures which correspond to a nonempty set 212 of development environment component 214 identifications 216 which identify respective development environment components 214. Some examples of identifications 216 include URLs identifying executable 132 component 214 binary files for tools 122, 508, 510, 512, 514, 518 or drivers 522 or shells 526 or libraries 412 or packages 414, setting values 506, security items 516, 520, or 524, and environment variables 528 with their specified values. A deployment set 218 data structure resides in the digital memory and has an upper threshold 226 and a lower threshold 226, specified, e.g. as a percentage or as cutoffs in another defined range of values such as a confidence value or a probability value in a range of [0, 1].

The at least one processor 110 is part of, operable by, or operable on behalf of, some coordinating subsystems of this system 202 that include: a correlation value acquiror 222, a deployment set populator 224, and a development environment executable image generator 228. Some embodiments also include an executable 132 image deployer 232 subsystem. Each of these subsystems is configured to perform part of a DEP method 1400 using its own particular structures and steps.

Upon execution by the processor set 110, the correlation value acquiror 222 acquires 1010 a correlation value 220 for each of a plurality of the development environment component identifications 216. Each correlation value in this example was or is calculated from at least component inclusion historic data 802, 304 of the frequency 842 of an inclusion 708 of the respective development environment component together with a respective code artifact 302 in one or more software development environments 210. Some variations employ one or more executable correlation values 220 calculated from at least one piece of component option response historic data 808, 304. Correlations are linear in some embodiments, while other embodiments also calculate nonlinear values.

Structures implementing the acquiror 222 include historic data 304 retrieval routines 924 such as file system access routines 120 or network communication routines 120, correlation value calculation 1012 routines 924, correlation value retrieval routines 924 that retrieve 1014 previously calculated correlation values, a historic data weighting 1432 routine 924, or a historic data restriction 1438 routine 924, depending on the particular embodiment's characteristics, e.g., whether none, some, or all of the correlation values were previously calculated, whether a relevance metric 822 is applied to weight 1432 values 220, whether historic data 304 is restricted 1438 to improve security and privacy, and so on.

Upon execution by the processor set 110, the deployment set populator 224 populates 1302 the deployment set data structure. In this example, the populator 224 includes in the deployment set data structure 218 each development environment component identification 216 which has a respective acquired correlation value 220 above the upper threshold, and to exclude from the deployment set data structure each development environment component identification which has a respective acquired correlation value below the lower threshold. In variations, only the upper threshold, or only the lower threshold, is employed. Regardless, the populator 224 forms 1404 a nonempty deployment set 218 in the digital memory.

Structures implementing the populator 224 include deployment set 218 data structures (e.g., bit vectors, linked lists, etc.), the threshold(s) 226, and a threshold-value comparison routine 924 which compares 1402 correlation values to threshold(s), for example.

In some embodiments, membership 706 of an ID 216 in the deployment set 218 is subject to an override 1306 that changes deployment set membership despite the relationship between correlation value and threshold(s) by including a component that would not have been included per that relationship or by excluding a component that would not have been included per that relationship.

In some embodiments, membership 706 of an ID 216 in the deployment set 218 is subject to a supplementation 1304 that adds a component to the deployment set 218 when the component lacks a corresponding correlation value. An executable 132 image 134 is not composed by supplementation alone in any embodiment claimed herein; one or more correlation values 220 and one or more thresholds 226 are always employed as taught herein.

Overrides and supplementations, or both, are performed in response to user-supplied membership command(s) 436.

Upon execution by the processor set 110, the development environment executable image generator 228 generates 1018 a development environment executable image 134 from at least the deployment set 218. The development environment executable image 134 includes the development environment components 214 which have development environment component identifications in the deployment set, subject to any override 1306. It excludes components that were excluded from the deployment set 218, subject to any override 1306.

Note that the image 134 is executable 132, as opposed to being a visual image such as data in a jpeg, tiff, png, mov, or other visual image format. An image 134 is executable 132 when at least a portion of the image 134 is executable. In some scenarios, a given component 214 is (or includes) a visual image, but unless stated otherwise, "image" herein refers to a development environment executable 132 image 134 which includes at least a portion that is executable. For the purpose of recognizing or generating executable images 134, scripts 440 are executable by interpreters 122, as is source code of interpreted or interpretable languages such as Python^{®} (mark of Python Software foundation), LISP, Perl^{™} (mark of The Perl & Raku Foundation), or PHP^{™} (mark of the PHP Group). Visual images, natural language text, settings per se, environment variables, security items 516, 520, 524 and source code of compiled languages such as C, C++, and assembly language are not executable, so far as defining an executable image 134 is concerned.

In this example, the development environment executable image includes at least one executable software development tool 122, e.g., a compiler 508, an analyzer 510 to perform static or dynamic analysis of internal structure or internal flow of a program under development, a source code editor 512, a debugger 514, or a performance profiler 518. Some examples of internal flow include control flow (e.g., call graphs) and data flow, or other flow information provided by static analysis or dynamic analysis. Some examples of internal structures include routines (methods are a kind of routine), symbol tables, abstract syntax trees, type definitions, class definitions, and APIs.

At least a portion of the image 134 is executable, meaning it is binary code, machine code, or other code configured to run (execute) on a virtual machine or a physical machine 101, as opposed to being, e.g., natural language 624, a setting 506, source code 420 that requires compilation to produce runnable software, etc.

In some embodiments, structures implementing the image generator 228 include an off-the-shelf image generator which is adapted to employ a manifest (a list of contents) that is derived from the deployment set, and routine(s) 924 to look up and incorporate values for image 134 non-executable components 214 such as settings 506, security components 516, 520, 524, and environment variables 528.

In some embodiments, the image deployer 232 includes an off-the-shelf image deployer which is adapted to set environment variables, install security items, and install settings, to the extent these actions are not already reflected in the image file 134 that is passed to the deployer for deployment.

In some embodiments, at least one respective code artifact 302 is identified by a code artifact identification 402 in the digital memory, which identifies at least one of: a software repository 404, a software repository commit level 408, a software project 410, a file extension 418 (part of a filename), a software library 412, a software package 414, a pattern 422 in a source code 420, or a textual description 424 of a software repository also describing one or more development environment components 214 associated with the software repository in a particular software development environment 210 or a set of software development environments 210.

In some embodiments and some scenarios, the code artifact identification 402 is implemented as a URL 434 that locates a repository 404, a project 410, a library 412, or a package 414. In some, the code artifact identification 402 is implemented as a value, e.g., a commit level 408 (e.g., for this commit 406, the most frequently used configuration components are specified), an extension 418, or a textual description 424.

In some embodiments and some scenarios, patterns 422 that correlate with particular tools or tool settings are given a name or number or index or address as an identifier 402.

One example of a pattern 422 involves a Python code 420 that imports the Pandas library 412. Developers of such code are likely to use an Anaconda^{®} distribution of the Python environment (mark of Anaconda, Inc.). Assume that a developer clones 704 a repository 404 which is not in the given embodiment's accessible historic data 304, and the embodiment detects 1448 Python code, e.g., by file extension matching or project settings, and detects 1448 use of the Pandas library, e.g., by parsing an import statement, string pattern matching, or use of a small machine learning model trained by supervised or semi-supervised learning to detect the pattern 422 in source code. In response to that pattern 422 detection 1448, the embodiment supplements 1304 the deployment set or otherwise includes an Anaconda^{®} distribution 438 as a default Python environment in the development environment 210. In a variation, the embodiment suggests 1450 inclusion of an Anaconda^{®} distribution as the default Python environment in the image 134, and the developer's response 926 to the suggestion is effectively a membership 706 command 436.

Other patterns 422 are processed similarly in some embodiments. In response to detecting .sln files in a repository, some embodiments include or suggest inclusion of a Visual Studio^{®} tool 122 (mark of Microsoft Corporation). In response to detecting a DirectX library 412 in C++ code 420, some embodiments include or suggest inclusion of an XBOX^{®} software development kit (SDK) (mark of Microsoft Corporation). These are pattern examples, not a complete catalog of patterns 422.

In some embodiments, at least one development environment component identification 216 identifies at least one of: a software development tool 502, 122, a software development tool setting 506, a software development tool extension 504, a software development tool extension setting 506, a digital security key 516, a digital security token 520, a digital security secret 524 such as a password or passphrase or biometric data, a runtime software 928 such as a common language runtime which supports multiple programming languages, a kernel software 120, a driver software 522, a shell software 526, or an environment variable 528 of a software development environment 210.

Some examples of software development tools 502 are compilers 508 and interpreters 508, analyzers 510, source code editors 512, debuggers 514, and performance profilers 518.

Some examples of tool extensions 504 are integrated development environment (IDE) 502, 122 extensions and browser 122 extensions.

Some examples of settings 506 are code editor indentation level, compiler optimization level, browser network configuration, alert triggers, user preferences, IDE code refactoring settings, privacy settings, memory allocation settings, cloud autoscaling policy, firewall rules, cache size, timeout values, menu display configuration, version control integration, and other options or customizations which influence or control how the tool displays data, interacts with other software, or is configured. Settings can be included or excluded as an image 134 component 214, individually or in groups, in some embodiments.

In some embodiments, all of the following are performed by the computing system 202 within a total time period 930 which is less than one minute long: the correlation value acquiror 222 acquires 1010 the correlation value for each of the plurality of the development environment component identifications, the deployment set populator 224 populates 1302 the deployment set data structure, and the development environment executable image generator 228 generates 1018 the development environment executable image. The one-minute execution time period 930 is distinctive in that it is smaller than the amount of time in which any human could reasonably be expected to perform arguably analogous mental activity or pen-and-paper activity, or activity that employs only previously well-understood routine conventional computing equipment that lacks the routines 924, data structures 218, and other DEP functionality 204 first taught herein.

Unlike human activity that is aimed at creating software development environments, performance of the computational DEP activity is enhanceable by use of computing mechanisms and techniques, e.g., faster processor 110 clock speeds, memory 112 such as solid state memory rather than electromechanical disk memory, memory with a larger bus, greater network bandwidth for greater throughput when fetching binary code 214 for inclusion during image generation, pre-processing of historic data 304 to calculate 1012 correlation values 220, substitution of compiled routines 924 for interpreted ones, optimized compilation of routines 924, and reduction of human interactions with a computing system without a corresponding decrease in many scenarios in the capability to perform the acquisition 1010, population 1302, and generation 1018. As a result, there is a range of time periods 930 in which embodiments taught herein will provide performance 918 exceeding human performance. For example, there are embodiments whose speed performing the particular steps 1010, 1302, 1018 cannot be matched or beat by a person. The exact range of time periods 930 depend on the embodiment and the person, but one minute is well within such ranges. This performance capability is specific to the DEP functionality 204, and does not mean that computing systems 102 can exceed human performance in any other field outside the primary focus of the present specification, which is the composition of development environments.

In some embodiments, a uniform resource locator 434 identifies 1008 a particular development environment component 214 or identifies 1004 a particular code artifact 302. In some of these embodiments, the computing system includes a uniform resource locator normalizer 922 which upon execution by the processor normalizes 1430 the uniform resource locator. Normalization 1430 is accomplished by a combination of parsing with lexical analysis or other string pattern matching, and string transformations, e.g., to remove substrings such as "https://" and "git@".

In particular, in some embodiments and scenarios, remote origin URLs undergo a process of normalization 1430. For example, assume users A and B both do work in a Contoso Calculator repository. User A clones the repository by executing, e.g., a git clone command represented here as "https colon slash slash github dot com slash contoso slash calculator dot git", whereas user B clones the repository by executing a git clone command represented here as "git at github dot com colon contoso slash calculator dot git". Embodiments do not need to use these deactivated representations, but would likely instead use actual received URLs.

These clone command representations include deactivated versions of URLs, in compliance with patent regulations which discourage or prohibit the presence of URLs that might be active, or be perceived as active. These deactivated URLs are provided as supplemental information that may be of interest to readers; deactivated URLs are not provided as an incorporation by reference of material that is located outside this disclosure document. The actual URLs in an embodiment or a real-world scenario would contain the indicated punctuation, e.g., ":" for colon, "/" for slash, "." for dot, "@" for at, and would omit the inserted blank space characters " " shown in these deactivated versions.

Both commands to clone the repository are valid, and would result in contributions to the same codebase of the repository, namely, contributions by A and by B, respectively. But reported values for the remote origin will differ, reflecting the differences in the URLs in the respective clone commands. For example, the URL reported for user A will begin "https:" whereas the URL reported for user B will begin "git@". When these different URLs are reported to an example embodiment, the embodiment normalizes them, converging in the string "github.com/contoso/calculator" within the embodiment (the deactivated representation of which for patent regulation compliance is "github dot com slash contoso slash calculator"). Normalization 1430 allows a system 202 to have an accurate count of unique development environment components associated with the repository regardless of the concrete remote origin URL used to clone the repository. Normalization also helps avoid duplication of a component within an executable image 134.

Some embodiments include a deployment set threshold determination means 920 for determining at least one threshold 226 of the deployment set data structure 218. In claim interpretation, this is a means-plus-function claim element. Corresponding structure includes, but is not limited to, the data structures and computational actions identified herein by any of the reference numerals 212, 216, 218, 220, 222, 224, 226, 706, 708, 710, 818, 822, 904, 906, 908, 910, 912, 914, 916, 920, 1010, 1016, 1302.

Some embodiments include an image deployer 232 which upon execution by the processor 110 deploys 1020 the generated development environment executable image 134 to a development environment computer 102.

In some embodiments, the deployer 232 includes an off-the-shelf image installer. In some, the deployer 232 is adapted by routine(s) 924 to install values for image 134 non-executable components 214 such as settings 506, security components 516, 520, 524, and environment variables 528, to the extent they are not incorporated in the image 134 in executable form but are instead specified in associated metadata, for example.

Other system embodiments are also described herein, either directly or derivable as system versions of described processes or configured media, duly informed by the extensive discussion herein of computing hardware.

Although specific DEP architecture examples are shown in the Figures, an embodiment may depart from those examples. For instance, items shown in different Figures may be included together in an embodiment, items shown in a Figure may be omitted, functionality shown in different items may be combined into fewer items or into a single item, items may be renamed, or items may be connected differently to one another.

Examples are provided in this disclosure to help illustrate aspects of the technology, but the examples given within this document do not describe all of the possible embodiments. A given embodiment may include additional or different kinds of DEP functionality, for example, as well as different technical features, aspects, interfaces, mechanisms, software, expressions, operational sequences, commands, data structures, programming environments, execution environments, environment or system characteristics, agents, proxies, or other functionality consistent with teachings provided herein, and may otherwise depart from the particular examples provided.

### Processes (a.k.a. Methods)

Processes (which are also referred to as "methods" in the legal sense of that word) are illustrated in various ways herein, both in text and in drawing figures. Figures 10 to 14 each illustrate a family of methods 1000, 1100, 1200, 1300, and 1400 respectively, which are performed or assisted by some enhanced systems, such as some systems 202 or another functionality enhanced system as taught herein. Method families 1000, 1100, 1200, and 1300 are each a proper subset of method family 1400. Moreover, activities are identified in Figures 1 to 9 and 15 as explicit or implicit method steps, which are likewise incorporated into method 1400, e.g., employing exponential curves for proactive threshold determination per Figure 15 and accompanying text of the specification, flowing data 118 in a system 202 according to dataflow 300, and so on. Also, steps that are not expressly tied herein to a particular reference number are not thereby excluded from method 1400. These block diagrams and flowcharts are merely examples; as noted elsewhere, any operable combination of steps that are disclosed herein may be part of a given embodiment when called out in a claim.

Technical processes shown in the Figures or otherwise disclosed will be performed automatically, e.g., by an enhanced system 202, unless otherwise indicated. Related non-claimed processes may also be performed in part automatically and in part manually to the extent action by a human person is implicated, e.g., in some situations a human 104 types or speaks an input such as a particular name for an image 134 to be saved under in a computer memory 112, e.g., a filename 602. Such input is captured in the system 202 as digital text, or captured as digital audio which is then converted to digital text. Regardless, no process contemplated as an embodiment herein is entirely manual or purely mental; none of the claimed processes can be performed solely in a human mind or on paper. Any claim interpretation to the contrary is squarely at odds with the present disclosure.

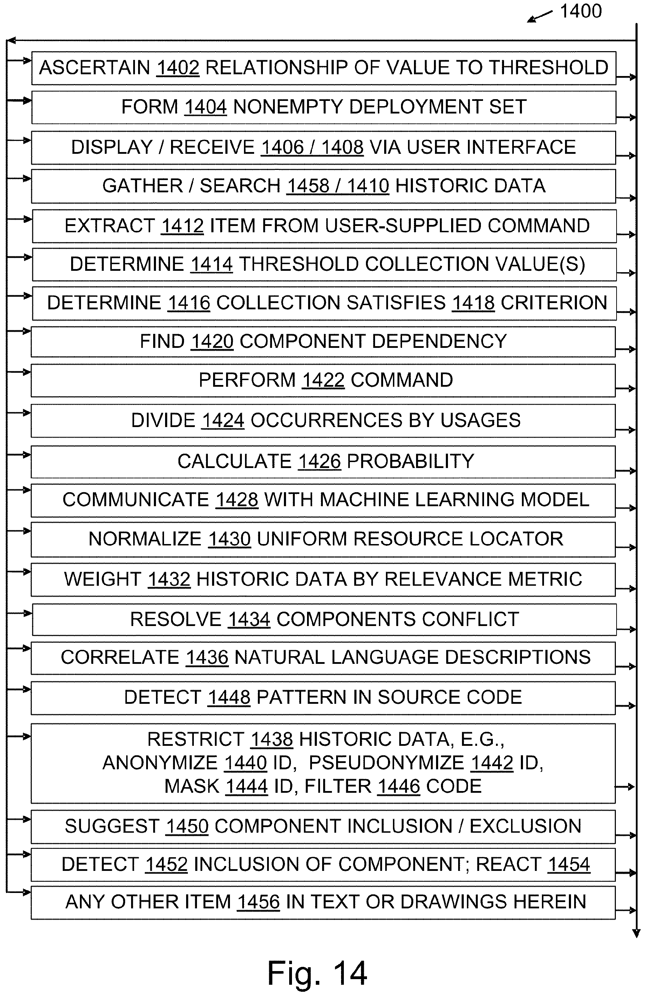

In a given embodiment zero or more illustrated steps of a process may be repeated, perhaps with different parameters or data to operate on. Steps in an embodiment may also be done in a different order than the top-to-bottom order that is laid out in Figure 14. Figure 14 is a supplemental portion of the textual and figure drawing examples of embodiments provided herein and the descriptions of embodiments provided herein. In the event of any alleged inconsistency, lack of clarity, or excessive breadth due to an interpretation of Figure 14, the content of this disclosure shall prevail over that interpretation of Figure 14.

Arrows in process or data flow figures indicate allowable flows; arrows pointing in more than one direction thus indicate that flow may proceed in more than one direction. Steps may be performed serially, in a partially overlapping manner, or fully in parallel within a given flow. In particular, the order in which flowchart 1400 action items are traversed to indicate the steps performed during a process may vary from one performance instance of the process to another performance instance of the process. The flowchart traversal order may also vary from one process embodiment to another process embodiment. Steps may also be omitted, combined, renamed, regrouped, be performed on one or more machines, or otherwise depart from the illustrated flow, provided that the process performed is operable and conforms to at least one claim of an application or patent that includes or claims priority to the present disclosure. To the extent that a person of skill considers a given sequence S of steps which is consistent with Figure 14 to be non-operable, the sequence S is not within the scope of any claim. Any assertion otherwise is contrary to the present disclosure.

Some embodiments provide or utilize a method 1400 method for composing a software development environment in a computing system 102, e.g., in a computer network 108. This method 1400 includes automatically and proactively: obtaining 1002 (e.g., via an API, user interface, or other interface) a code artifact identification 402 which identifies a code artifact 302; getting 1006 (e.g., via an API) a nonempty set 212 of development environment component identifications 216 which identify respective development environment components 214; for each of a plurality of the development environment component identifications, acquiring 1010 (e.g., by on-the-fly calculation 1012 or retrieval 1014 of a prior calculation 1012 result 220) a correlation value 220 which is calculated from at least one of: component inclusion historic data 802, 304 of the frequency 842 of an inclusion 708 of the respective development environment component with the code artifact in one or more software development environments 210, or component option response historic data 808, 304 of the frequency 842 of a user response 806 to an option 804 (e.g., via a user interface) of inclusion 708 of the respective development environment component with the code artifact in one or more software development environments; placing (e.g., via adding a value to a list or other data structure) in a deployment set 218 each development environment component identification which has a respective correlation value above an upper threshold 226, in response to ascertaining 1402 (via execution of a comparison expression) that the respective correlation value is above the upper threshold, thereby forming a nonempty deployment set; and generating 1018 (e.g., via retrieving binary data of one or more tool components 214 and assigning values for non-executable components 214, and formatting it for deployment 1020) a development environment executable image from at least the deployment set, the development environment executable image including multiple development environment components 214 which have development environment component identifications in the deployment set, the development environment executable image including at least one executable software development tool 502.

In some embodiments and scenarios, component option response historic data 808, 304 includes or is computed from a count of how many times a suggested development environment component has been accepted, and operates to provide additional weight or progress toward meeting or exceeding the upper threshold.

In some scenarios, this historic option response data 808 is weighted differently than a Pc counts value discussed herein with respect to Figure 15, in that accepted suggestions to include a component are distinguished from actual inclusion of a component, reflecting scenarios in which composition 206 is not completed, inclusion is overridden 1306, or composed environments are not deployed 1020. In one example, historic option response data 808 is weighted at 20% of the value of an actual usage count in historic inclusion data 802. Other embodiments employ another weight 818 in the range from 0% to 50% as a discount factor. Still other embodiments do not discount option response data 808 relative to inclusion data 802 when calculating correlation values 220.

In some embodiments, the method 1400 includes deploying 1020 the generated development environment executable image 134 onto at least one of: a virtual machine 604 on a physical 610 computer 612, 102, a container 606 in a cloud computing environment 124, a physical 610 server computer 614, 102, a physical 610 workstation computer 618, 102, an air-gapped 608 computing system 102, a portable 616 computing device 101, 102, or an Internet of Things 620 computing device 622, 101, 102.

In some embodiments, the computing system facilitates user input 926 to tailor the development environment executable image 134 to a user preference 932. This facilitating includes: displaying 1406 in a user interface 130 a description 624, 424 of a particular development environment component 214 whose corresponding correlation value 220 is between a lower threshold 226 and the upper threshold 226, the lower threshold being above zero and less than the upper threshold; receiving 1408 a membership command 436 via the user interface 130, the membership command including an inclusion 708 command or an exclusion 710 command as to membership 706 of the component 214 in the development environment 210; and including 708 or excluding 710 the particular development environment component's identification from the deployment set according to the membership command.

In one example scenario, correlation values are in the range [0, 1], the lower threshold is 0.3, and the upper threshold is 0.75. Component X has a correlation value 0.9, so the embodiment automatically and proactively includes X in the deployment set (that is, includes the ID 216 for X) without first querying the user. Component Y has a correlation value 0.1, so the embodiment automatically and proactively excludes Y from the deployment set (that is, excludes the ID 216 for X) without first querying the user. In some embodiments, exclusion of an ID 216 is accomplished by not including the ID 216 in response to the corresponding correlation value comparison to the threshold(s). In other embodiments, exclusion of an ID 216 also includes marking 934 the ID as excluded, e.g., by adding the ID to an excluded-components list 936 which is displayed proactively or on demand. Component Z has a correlation value 0.6, so the embodiment queries the user, e.g., by performing the displaying 1406 and receiving 1408 described above. Whether the component Z ID is included or excluded depends on the user input received 1408 in the resulting membership command.

In some embodiments, obtaining 1002 the code artifact identification includes at searching 1410 at least one of: the component inclusion historic data 802 or the component option response historic data 808, the searching being subject to a code artifact category 426 ordering 428 which includes at least two code artifact categories 426.

In one example scenario, an embodiment identifies the code artifact(s) for a given development effort by searching 1410 a table of historic data correlations 220 per code artifact categories. In this example an embodiment looks 1410 first for a repository 404 name 402, then it looks 1410 for a project 410 name 402, then looks 1410 for a library 412 name 402 or a package 414 name 402, then it looks 1410 for a file 416 extension 418, 402. Each of these searches checks for a correlation 220 of an artifact 302 or artifact category 426, or both, with a development environment component 214 based on historic data 304. Other categories 426 (e.g., text description 424), other category orderings 428, or both, are used in variations. In some scenarios, the search 1410 ends when any correlation is found, while in other scenarios multiple search results (multiple correlations 220) are accumulated.

In some embodiments, obtaining 1002 the code artifact identification includes extracting 1412 the code artifact identification 402 from a user-supplied command 436, e.g., by parsing the command. In one example, an embodiment extracts a repository name 402 from a user command to clone the repository. This permits the embodiment to automatically and proactively make progress toward composing and generating a development environment image for upcoming work on the cloned copy of the repository, e.g., as background computation.

Some embodiments employ only a subset of the listed examples of code artifact IDs 402. In particular, some embodiments focus on repository remote original URLs 434, 402. A remote origin URL is the URL which was used to clone the repository. In some scenarios, a repository has multiple remote origin URLs. Some embodiments add all the remote origin URLs 402 from all the repositories included in a development environment when composing the development environment component collection 212.

In some embodiments, the computing system determines 1414 a deployment set threshold collection 912, the deployment set threshold collection having at least one member, the deployment set threshold collection including the upper threshold 226, or including a lower threshold 226 which is above zero and is less than the upper threshold, or including both the upper threshold and the lower threshold, and the determining 1414 includes determining 1416 that the deployment set threshold collection satisfies 1418 a statistical significance criterion 904, 906 in that at least one member of the deployment set threshold collection is statistically significant 902 for at least one of: the component inclusion historic data 802 or the component option response historic data 808.

Some embodiments automatically and proactively calculate a threshold 226 which has a computational basis in statistical significance of the threshold, or based on the amount of components that are clearly included or excluded (covered) by the threshold, or both.

As an example of determining a statistically significant threshold, assume that the amount of development environments scanned is N, and that each development environment has a set of development environment components of size M. Now pivot the data to see development environment component classes, and a count of instances associated with each class, referred to here as Uc. Posit that 0 <= Uc <= N is always true, given that there are only N development environments and each development environment contributes at most 1 instance of the development environment component class to the Uc count. One can graph an ideal correlation between Uc and N to determine a minimum value and a maximum value for thresholds 226 based on exponential decay 834 illustrated in Figure 15, for example. Other smooth decreasing curves are used in variations.

Let Pc denote the ratio of Uc over N, where 0 <= Pc <= 1. This particular example establishes a top threshold decay defined by y=exp(-x/50) and a bottom threshold decay defined by y=exp(-x/25), corresponding to the graph shown in Figure 15. Variations employ different exponential decay bracketing values than 50 and 25, which one of skill can identify by applying the teachings herein without undue experimentation.

This example also caps the threshold decay at the value produced by N = 40 whenever there are more than 40 datapoints. Variations use a different cap 840 which one of skill can identify by applying the teachings herein without undue experimentation, or no cap 840.

This example defines three categories of components. A highly suggested development environment component category corresponds to any class which has a Pc above the top threshold. A suggested development environment component category corresponds to any class which has a Pc below the top threshold but above the bottom threshold. A not suggested development environment component corresponds to any class which has a Pc below the bottom threshold.

Thus, this example approach provides a classification algorithm for potential environment 210 components which are associated with a code artifact 302, based on exponential decay. As an embodiment gathers or accesses more historic data 304, the embodiment produces better results 218 with higher confidence even in scenarios that involve reducing thresholds.

In some embodiments, the statistical significance criterion is satisfied by a particular threshold when the particular threshold is statistically significant for the historic data about the frequency of use of the respective development environment component with the code artifact with respect to a predetermined p-value. The p-value reflects the difference between two observed values. A threshold is statistically significant if the p-value is less than an alpha value (significance level) set as a default or by a user. A frequently selected alpha value is 0.05.

In some embodiments, the computing system determines 1414 a deployment set threshold collection 912, the deployment set threshold collection having at least one member, the deployment set threshold collection including the upper threshold 226, or including a lower threshold 226 which is above zero and is less than the upper threshold, or including both the upper threshold and the lower threshold, and the determining 1414 includes determining 1416 that the deployment set threshold collection satisfies 1418 a coverage 908 criterion 910 in that (a) at least a specified inclusion amount 914 of the development environment component identifications have respective correlation values above the upper threshold, the inclusion amount being greater than zero, or (b) at least a specified nonzero exclusion amount 916 of the development environment component identifications have respective correlation values below the lower threshold, the exclusion amount being greater than zero, or both (a) and (b).

In some embodiments, the coverage criterion is satisfied by a particular threshold when at least a specified amount of the development environment component identifications has a determinate inclusion or a determinate exclusion according to the particular threshold. In some embodiments, the inclusion amount and exclusion amount are each tunable by users.

Some examples of the coverage criterion 910 are: (a) at least 5 components must have a correlation value above the upper threshold, (b) at least 15% of the components must have a correlation value above the upper threshold, or (c) no more than 35% of the components can have a correlation value between the lower threshold and the upper threshold.

In some embodiments, the computing system finds 1420 a dependency 534 which specifies that a first development environment component depends on a second development environment component, detects 1452 an inclusion of the first development environment component's identification in the deployment set, and reacting 1454 to the dependency by at least one of: including 708 the second development environment component's identification in the deployment set 218 when the second development environment component identification's correlation value 220 is below the upper threshold; or including 708 the second development environment component's identification in the deployment set 218 when the computing system 202 is configured to receive and perform a membership command 436 and a membership command directed at the second development environment component is absent from the computing system, wherein a given membership command directed at a given development environment component indicates whether to include the given development environment component in the development environment executable image.

Thus, some embodiments detect a dependency 534 between components, such as a build dependency or an execution time dependency. Some embodiments will then include in the generated image 134 a component Y that another component X depends on, even when the component Y would have been not included, or affirmatively excluded, without the dependency.

In some embodiments, a dependency is detected 1452 at least by one or more of: parsing an import, include, or similar source code statement; parsing a makefile, project manifest, or other build file; parsing a configuration file; executing an off-the-shelf dependency analyzer which is supplemented or enhanced with a routine 924 to detect dependencies on non-code components such as security items 516, 520, 524 and environment variables 528; executing an off-the-shelf environment configuration checker which is supplemented or enhanced with a routine 924 to detect dependencies on security items 516, 520, 524 and dependencies on code components; attempting in a current environment to build a program that is under development and parsing any resulting errors for "file not found" or similar messages; or performing a test run by attempting to build the program that is under development in a preliminary version of the development environment, e.g., in a sandbox or background virtual machine, and parsing any resulting errors for "file not found" or similar messages. This list is not comprehensive, merely illustrative.

In some embodiments, calculating 1012 the correlation value 220 of a particular development environment component 214 from the historic data 304 includes at least one of: dividing 1424 a total number 432 of occurrences 430 of the code artifact 302 by a number of usages 820 of the particular development environment component in conjunction with an occurrence of the code artifact; calculating 1426 a probability 824 that the particular development environment component is used, given that the code artifact is present (e.g., by applying Bayes theorem); or submitting 1428 at least a portion of the historic data 304 to a machine learning model 812 and prompting 814, 1428 the machine learning model for a numeric measure 816 of correlation of the code artifact 302 with the particular development environment component 214.

Some embodiments, restrict 1438 at least a portion of the historic data 304 from use in calculating correlation values, or from other computational activities within a method 1400, by at least one of: anonymizing 1440, pseudonymizing 1442, or masking 1444 a software developer 828 identity 830 or a software developer organization 836 identity 838 of usage data from which the historic data is derived; filtering 1446 out non-public 826 source code 420 from usage data from which the historic data is derived; or filtering 1446 out software code which is related to non-public software libraries 412 or related to non-public software packages 414 from usage data from which the historic data is derived. Parsing, overwriting, looking up items to check if they are public, determining dependencies as part of implementing "related to", and other actions are employed as part of restricting 1438 in some embodiments.

### Configured Storage Media

Some embodiments include a configured computer-readable storage medium 112. Some examples of storage medium 112 include disks (magnetic, optical, or otherwise), RAM (random access memory), EEPROMs (electronically erasable read-only memories) or other ROMs (read-only memories), and other configurable memory, including in particular computer-readable storage media (which are not mere propagated signals). In some embodiments, the storage medium which is configured is in particular a removable storage medium 114 such as a CD, DVD, or flash memory. A general-purpose memory, which is removable or not, and is volatile or not, depending on the embodiment, can be configured in the embodiment using items such as a deployment set 218, thresholds 226, threshold overrides 230, component IDs 216, correlation values 220, and DEP functionality 204 software in items 222, 224, 228, 232, in the form of data 118 and instructions 116, read from a removable storage medium 114 and/or another source such as a network connection, to form a configured storage medium. The foregoing examples are not necessarily mutually exclusive of one another.

The configured storage medium 112 is capable of causing a computer system 202 to perform technical process steps for providing or utilizing DEP functionality 204 as disclosed herein. The Figures thus help illustrate configured storage media embodiments and process (a.k.a. method) embodiments, as well as system and process embodiments. In particular, any of the method steps illustrated in Figures 10 to 14, or otherwise taught herein, may be used to help configure a storage medium to form a configured storage medium embodiment.

Some embodiments use or provide a computer-readable storage device (a.k.a. medium) 112, 114 configured with data 118 and instructions 116 which upon execution by a processor 110 cause a computing system 202 to perform a method 1400 for composing a software development environment, the method performed by a computing system. This method 1400 includes: obtaining 1002 a code artifact identification which identifies a code artifact; getting 1006 a nonempty set of development environment component identifications which identify 1008 respective development environment components; for each of a plurality of the development environment component identifications, acquiring 1010 a correlation value which is calculated 1012 from at least one of: component inclusion historic data 802 of the frequency of an inclusion of the respective development environment component with the code artifact in one or more software development environments, or component option response historic data 808 of the frequency of a response to an option of inclusion of the respective development environment component with the code artifact in one or more software development environments; placing 1016 in a deployment set each development environment component identification which has a respective correlation value above an upper threshold, thereby forming a nonempty deployment set; marking 934 for exclusion from the deployment set each development environment component identification which has a respective correlation value below a lower threshold, the lower threshold being less than the upper threshold; and generating 1018 a development environment executable image from at least the deployment set, the development environment executable image including 708 at least one development environment component which has a respective development environment component identification in the deployment set, the development environment executable image excluding 710 at least one development environment component which has a respective development environment component identification marked for exclusion, the development environment executable image including 708 at least one executable software development tool 502 which includes at least one of: a compiler, a static analysis tool, a source code editor, a debugger, or a performance 918 profiler.

In some embodiments, the method includes receiving 1408 a repository cloning command, and the placing 1016, marking 934, and generating 1018 are performed in response to at least the repository cloning command.

In some embodiments, calculating 1012 the correlation value of a particular development environment component from the historic data includes weighting 1432 at least one item of the historic data according to a relevance metric.

For example, some embodiments assign greater weight to tool choices that are identified as more relevant because they were made by the developer's own team or at least their own organization, or because they were made more recently than other choices of tools 122 for use in a development environment. In some embodiments, image 134 membership 706 determinations based on the remote origin URL of a repository are computed only from historic data collected and controlled by the developer's organization. Some other embodiments interpolate or average scores 220 derived from the developer's organization data 304 with those derived from more global or shared data 220, so that end users benefit from wisdom of the crowds without losing accuracy as to an organization's specific needs.

Some embodiments calculate 1012 at least one correlation value from both component inclusion historic data 802 and component option response historic data 808.

Some embodiments resolve 1434 a conflict 530 between development environment components. Many conflicts have a complementary nature, for example: users with dark mode versus users with light mode. The total number of data points N is the sum of both groups. Many conflicts will be avoided by basing inclusion / exclusion on the upper threshold and the lower threshold, but some conflicts are still possible. Conflict resolution 532 routine(s) 924 operate as discussed herein to resolve some conflicts, whereas some other conflicts are merely reported by the embodiment.

In a first example conflict scenario, 35% of historic data has default IDE set to IDE-A, and 40% has default IDE set to IDE-B. 80% has IDE-A installed and 80% also has IDE-B installed. The upper threshold is 75%. Thus, IDE-A and IDE-B will both be included in the deployment set, but they can't both be the default IDE. The system 202 recognizes that a default setting should be included in the image, and a conflict resolution 532 routine 924 selects the setting for IDE-B because it has the greater usage, even though that usage matches a correlation value below the upper threshold.

In a variation scenario, IDE-A and IDE-B both meet the installation thresholds, so both are installed. If both of them meet the threshold to be set as the default IDE, one embodiment only suggests the IDE with the higher Pc value, a.k.a. the most popular one.

In a second example conflict scenario, 85% of historic data includes directory-A in a search path environment variable, and 80% of historic data includes directory-B in the same search path environment variable. The upper threshold is 75%. The system 202 recognizes that the search path can include both directories, so it includes them both, with directory-A listed first because it has the greater percentage use in the historic data.

In some embodiments, obtaining 1002 the code artifact identification includes extracting 1412 the code artifact identification from a user-supplied command, and the code artifact identification includes or represents a user-supplied natural language description 624 of at least a portion of the development environment; and acquiring 1010 the correlation value includes correlating 1436 at least a portion of the user-supplied 702 natural language description with an artificially-created 626 natural language description of at least a portion of the development environment.

In one example, during an analysis of a development environment to gather historic data 304, whenever DEP functionality 204 finds a repository 404 it invokes a machine learning 810 model 812 or other artificial intelligence (AI) analyzer 812 on at least a portion of the source code stored 1102 in the repository, to create a human-readable set of key words associated with the repository and the set of components that are part of this development environment configuration. When an end user requests a new development environment for a specific task, the embodiment provides a text-based search capability to suggest or include components as part of the new environment. For instance, a user asks for a Dev Box for "Al development", and the embodiment correlates words of that request with a set of repositories used for "Al development", and then extracts the most correlated components 214 to include proactively or to suggest to the end user.

### Additional Observations

Support for the discussion of DEP functionality 204 herein is provided under various headings. However, it is all intended to be understood as an integrated and integral part of the present disclosure's discussion of the contemplated embodiments. This disclosure is meant to be understood as a whole. In particular, this disclosure is unlikely to be fully and properly understood during or after only a single top-to-bottom pass through its text. For a full and proper understanding, most if not all readers will also use keyword searches, reference numeral searches, correlation of the specification text with the drawing figures, correlation of the claims with the rest of the text and with the drawing figures, and other nonlinear reading approaches, in addition to reading the full text from top to bottom.

One of skill will recognize that not every part of this disclosure, or any particular details therein, are necessarily required to satisfy legal criteria such as enablement, written description, best mode, novelty, nonobviousness, adequate claim support via technical teachings in the description, inventive step, or industrial applicability. Any apparent conflict with any other patent disclosure, even from the owner of the present subject matter, or any reference external to the present disclosure, has no role in interpreting the claims presented in this patent disclosure. It is in the context of this understanding, which pertains to all parts of the present disclosure, that examples and observations are offered herein.

Some embodiments configure an optimized development environment while imposing little or no burden on a developer to include or exclude particular development environment components in the development environment 210.

In particular, some embodiments help solve a technical problem of how to rapidly configure a development environment for a particular software development effort 208 while conserving computational resources 536 by excluding components that will not be useful for that effort and also including components that will be useful for that effort. This result is accomplished by computationally determining 1400 component inclusions and exclusions largely or entirely by using thresholds 226 that categorize correlations 220 which are calculated from historic data 304 showing correlation of one or more code artifacts 302 of the particular software development effort with components 214 that have historically been used with those code artifacts. Intermediate correlation value components are presented to the developer for a membership decision.

Some embodiments help solve a technical problem of how to configure a development environment 210 for a particular software developer 828, 104 to optimize the development environment for a technical problem area, without incurring extra delay to permit investigation of possible development environment configurations. Environment 210 configuration is particularly problematic when the developer lacks information about the likely utility of possible configurations at the time the development environment is being configured, e.g., because the developer is not familiar with the problem area or is not familiar with available configurations. This solution is achieved by computationally determining component inclusions and exclusions on correlations between one or more code artifacts of the particular software development effort and components which have historically been used with those code artifacts, as described herein.

A technical context of some embodiments involves creating software development environments that are configured for efficient use of computational resources, for security, for usability, and to provide other benefits. One prior approach has been to have developers manually choose the tools, tool settings, and other configuration values that define a development environment. This kind of "build from scratch" approach is tedious, and developers tend to leave out things that would be useful, especially if the developer is inexperienced or is not familiar with a particular set of tools. Another prior approach has been for **IT** admins to generate "kitchen sink" development environments that include many tools most developers will not actually end up using. This wastes computational resources 536.

Infrastructure as code, configuration as code, and brittle expert system approaches likewise lack one or more desired characteristics, such as accuracy in their predictions of which components will be used, protection for confidential information whose disclosure degrades security or privacy, low administrator burden, low developer burden, usability, scalability, dynamic automatic adaptation to changes in usage patterns, and efficient use of storage and bandwidth.

Some embodiments gather 1458 what is termed here "code data" 304 that represents the presence of various code artifacts 302 (repository names being one of many examples), gather 1458 what is termed here "environment data" 304 that represents the presence of various development environment configuration values 214 (tools and tool settings being two of many examples), and check 1012 for statistically significant correlations 220 between the code data and the environment data. When a developer wants a new development environment generated in order to work on a particular repository R for example, one embodiment includes or excludes items 214 for that new development environment according to the correlations. When a tool X correlates above a threshold T-high 226 with repository R, X is included in the new development environment, and when X correlates below a threshold T-low 226 with repository R, X is excluded from the new development environment. What happens when the correlation is between T-high and T-low depends on the approach taken in the embodiment.

Some embodiments facilitate user input at an interactive software development tool 204 which defines a development environment configuration. The facilitation of user input involves including 708 high-correlation items 214 in an image 134 without making the user expressly select them individually, as well as excluding 710 low-correlation items without making the user expressly remove them individually, e.g., as when removing items from a kitchen sink image. The mid-correlation items 214 are shown 1406 to the user as opt-in options, or in some variations as opt-out options. The item correlations 220 are computed 1012 from historical data 304 about a frequency 842 of use 820 of each item in conjunction with a code artifact 302 such as a source code 420 repository 404.

In one scenario, an embodiment obtains 1002 a source code repository 404 name 402, gets 1006 data about available tools 502, 214, computes 1012 correlations 220 between the repository name and tools according to historic data 304 about the frequency 842 of use 820 of each tool 502 in conjunction with the repository 404, and includes or excludes tools in response to comparing the correlations to thresholds 226. Then the embodiment generates 1018 a resulting image 134 containing at least one included tool 502 having a computed correlation above a threshold, e.g., a compiler 508, 502, an interpreter 508, 502, or a static analysis tool 510, 502. This example embodiment also deploys 1020 the image 134 as part of a software development environment 210 for software development work 208 on or in the source code repository 404.

In some embodiments, computational operations are performed in a computer 102 or triggered to be performed in a computer 102, by an image 134. Such operations include, e.g., memory garbage collection, garbage collection optimization, static analysis of code, compilation, scalability implementation, or security implementation.

One example embodiment composes 206 and generates 1018 a development environment image 134 which defines an initial internal state 938 of a development environment machine, e.g., a memory 112 state, a processor 110 state, a state of a network 108 interface or another interface. The machine in question is, e.g., a virtual machine 604 or a physical machine 101.

This image 134 is generated as an efficiently optimized subset of available tools and tool settings. In that regard, the composed and generated image 134 is analogous to a result of source code compilation that generates executable code. Indeed, both the image 134 composition 206 activity and source code compilation activity produce a result containing executable code, although they do so in different ways than one another, and there are other differences, such as the generation of non-executable components 214. Composition 206 produces non-executable image 134 content (settings 506, environment variables 528, security items 516, 520, 524) that is not part of conventional compiler output. A tailored security configuration is one of the things the image 134 includes in some scenarios.

Composition 206 in some scenarios includes mapping code data 304 to environment data 304 via correlations 220. Using the correlations helps make the generation of development environment images scalable, even though the generated images 134 will often differ from one another.

In some embodiments, a method 1400 for deploying development environments includes: obtaining 1002 a name of a repository; getting 1006 a list of tools 122; for each tool in the list, either retrieving 1014 from storage 112 a previously calculated tool correlation value, or calculating 1012 a tool correlation value from historic data about the frequency of use of that tool with the repository; placing 1016 in a deployment list 218 each tool whose correlation value is above an upper threshold; marking 934 for exclusion from the deployment list each tool whose correlation value is below a lower threshold; and generating 1018 a deployable development environment image 134 which includes the tools listed in the deployment list and which excludes the tools marked for exclusion. In this context, deployable means the image 134 is ready to receive control and execute after it is copied onto the development environment machine.

In some embodiments, a software development computing environment method 1400 performed by a computing system includes: obtaining 1002 a code summary 302 which represents at least one of: a pattern 422 in a source code repository 404 or other collection of source code 420; calculating 1012 a correlation level 220 between the code summary and a software development computing environment 210 customization 218; determining a customization category (categories are include, exclude, ask) from the correlation level and a predetermined threshold; and configuring 1406 a user interface 130 according to the customization category, e.g., by asking a user whether to include intermediate-level 220 customization items 214, and by not asking about high-level items 214 (include 708 them in the customization 218 without asking the user) or low-level items 214 (exclude 710 them from the customization 218 without asking the user).

Some variations correlate a specific repository 404 (identified by a normalized 1430 version of its upstream URL) against a common configuration used by developers of code in that repository. This is done in some scenarios without looking at the contents 420 of the repository to begin with, based on the URL of the repository's remote origin. Once enough people in a developer's organization have cloned a repository and are working against it, an embodiment takes 1458 automatic and anonymous surveys of their machine configurations 304 and establishes 1012 correlations on which tools are present or absent, and on other configurations commonly associated with the repository. Some embodiments include an analysis 1012 of the code contents of the repositories it is indexing 1458, so that it can establish associations 220 between code patterns and configuration which have a data 304 basis beyond a mere association between repository URL and development environment configuration. Harvested 1458 data is stored 1102 in Hosted On Behalf Of (HOBO) storage in some embodiments.

With regard to automatic configuration of development environment based on often-used tools and settings for a project, software development environments are sometimes set up "by hand" (i.e., built from scratch). Sometimes engineers automate at least part of the development environment setup using scripts. But the complexity of writing such automation, paired with the low re-use of such scripts, makes investment of time and effort in them a low priority for most software development teams, even when the result of automation could be less wasted time, higher reliability of the environment, and increased developer satisfaction.

Some embodiments taught herein suggest 1450 to developers and IT administrators a set of configuration proposals for each repository of code they want to work on. An organization that opts into this example system 202 is able to collect 1458 anonymized 1440 information about tools, options, configuration, and other software environment characteristics from their own developers using managed software development environments, such as Microsoft Dev Box^{™} environments (mark of Microsoft Corporation) or GitHub CodeSpaces^{™} environments (mark of GitHub, Inc.). The data 304 gathered centers around the repositories that the developers work on, as well as the tools they use in their environments. Over time, the body of collected data is used to build a correlation model which assigns a confidence number 220 to a tool as it pertains to work on a repository.

In one example, data 304 regarding a repository at https colon slash slash contoso dot com slash scientific slash calculator indicates that 85% of the developers use Microsoft Visual Studio^{®} software, 55% use WinDBG^{™} software, and 12% use a VIM keyboard extension for the Visual Studio^{®} tool (marks of Microsoft Corporation). Consequently, when a new development environment is requested specifically for work on the calculator project, an example embodiment suggests 1450 to the developer with high certainty 220 that they would benefit from having a development machine pre-configured with the Visual Studio and WinDBG software. The developer optionally explores which other tools are used with this repository, and the embodiment shows the VIM extension as one that is sometimes used. Thresholds 226 determine which configurations are shown as suggestions 1450, which are only shown on request, and which ones are omitted. For example, if only 1% of the developers use a Postman^{®} API platform 442, the embodiment does not surface that platform as a component 214 (mark of Postman, Inc.).

In the context of some embodiments, IT administrators have governance controls 122 over which configurations are allowed or disallowed. Some embodiments permit IT administrator to curate which configurations are offered to developers, while other embodiments let all the configurations be offered to developers because the IT administrators trust the sources of the packages 214 that could be installed in the environments 210.

In some embodiments, configurations 218 are implemented as images 134 using WinGet Desired State Configuration yaml files.

In one example, a flow to a developer is as follows. First, the developer specifies a new development environment machine (e.g., a virtual machine) and specifies which repository or repositories they will work on using that machine. These actions are either part of creating the environment or done when the developer enters a command to the system 202 to clone the repository. Second, the system 202 detects data indicating an intention of cloning a repository and queries a knowledge base 304 for historic known configurations 304 for that repository, or forms a potential configuration. If a result is found or formed, these suggestions are presented 1450 to the developer so they can choose which of them they want to apply to their environment. If any suggestion is selected, the configuration is applied dynamically to the environment. The configuration includes tools, settings, and/or other development environment customizations.

In some embodiments, an example data flow to an IT administrator is as follows. First, a high level of confidence 220 is established by the system 202 that users of a Scientific-Calculator project historically install Visual Studio software and WinDBG software. A notification is shown to the IT administrator of that project, indicating that the system 202 has suggestions on configurations to propose, to run automatically whenever a new development environment 210 is created for the calculator repository. If the IT administrator agrees to apply this configuration broadly, the Scientific-Calculator project is updated to employ this configuration (at least by default) for all new development environments for the calculator repository going forward. A developer will then experience at least two advantages, namely, no longer being asked whether to install Visual Studio and WinDBG software because they will always be installed, and gaining access to a pre-configured virtual machine in a few seconds instead of waiting several minutes. In some scenarios, the faster access relies on the IT administrator having enabled hot-pooling of development environments for this repository.

Some embodiments also suggest configurations dynamically for existing software development environments. For example, if 90% of development environments in which a developer's peers are active include VSCode^{™} software for the repository the developer entered a command to clone, then the developer is given a popup or other notification indicating there are suggested tools and configurations to help work in this project (mark of Microsoft Corporation). Other embodiments present the developer a menu to explore tool suggestions based on their current configuration, which expose what other developers are using for their environments as it pertains to the repositories that the developer has cloned in their machine, allowing the developer to see which of these configurations they already have, and which ones would be useful for them to acquire and apply.

Some embodiments leverage the body of collected data 304 and enrich it with source code analysis, in order to produce a machine learning model 812 that upon execution suggests one or more configurations based on similarities in code patterns and known good configurations. For example, assume that the model 812 learns from training data 304 that Python developers whose code uses a TensorFlow^{®} platform 442 (mark of Google Inc.) or a PyTorch^{®} library 412 (mark of The Linux Foundation) usually have the NVIDIA CUDA^{™} (mark of NVIDIA Corporation) driver extension 504 installed, as well as VSCode^{™} software and Microsoft Windows Subsystem for Linux (WSL^{™}) software (VSCode and WSL are marks of Microsoft Corporation; Linux is a registered mark of The Linux Foundation). In this scenario, a developer has a system 202 clone 704 a machine learning repository that contains Python code that uses PyTorch. This example system 202 will suggest an appropriate configuration for the development environment with VSCode, WSL, and CUDA, despite the absence of data 304 specifically establishing that the developer's coworkers in the organization have followed that pattern of usage.

The presence of configuration scripts in repositories is rare. However, based on their presence in some repositories, in addition to suggesting configuration, the machine learning model 812, 204 suggests configuration scripts based on scripts present in similar repositories, as evident in data 304.

Some embodiments allow IT administrators to choose whether their organization's data can be utilized in training this model 812 or not, and whether results 1450 from this model are available to their developers or not.

In some embodiments, data 304 from these managed development environments is collected, stored, and processed in compliance 1438 with privacy regulations, addressing transparency and security policies. For example, if a malicious developer crafts a repository in their development environment that tries to pass as a repository that they shouldn't have access to, a corresponding configuration associated to this repository is not served to them. This is accomplished by leveraging checks against the source code providers on whether the end user can read/write code, or by leveraging proof-of-access technology, for example.

In addition to the automation and learning curve advantages provided by some embodiments in comparison to other approaches, some embodiments provide practical implementations of a paradigm for constant self-improvement and diffusion of development environment tools and configurations and shared practices within and across organizations, e.g., via a machine learning model 812. New code projects based on platforms or other code artifacts 302 that the model 812 has data 304 about get started faster by inferring development environment settings 506, tools 502, and other components 214 from similar or related code bases 420 seen in the past. Also, developers who are onboarding to new codebases automatically receive development environments equipped and configured with the common (i.e., shared usage of respective copies) tools and configurations from developers already working on that codebase.

### Machine Learning Models, including Language Models

Some examples of models include large language models (LLMs), small language models (SLMs), large action models (LAMs), small action models (SAMs), multimodal language models, multimodal action models, and foundation models (a term which has multiple meanings in the industry that do, however, overlap the definitions herein). A language model is trained on tokens representing at least natural language or programming language, whereas an action model is trained on tokens representing at physical least actions, e.g., robotic movements, human or animal movements, workpiece movements, real-world object manipulation, or simulations thereof. Some action models can learn from observation and demonstration of user physical actions. A multimodal model accepts as input, or produces as output, or both, multiple modes of data, e.g., data representing written language, still images, video (e.g., photographed or animated or mixed) clips, audio (including direct voice input in some, and audio clip input or output), music, sensor telemetry, augmented reality, or other modes. Some multimodal models encode different modes separately, while others encode multiple modes of input data together, e.g., vision and text. Some merge modes, some utilize cross attention across modes.

Many models, but not all, utilize a transformer architecture internally, e.g., in decoders or in paired encoder-decoder architectures. One exception is a Vision-Mamba model, a vision tasks model that utilizes an alternate internal architecture of repeated Mamba blocks interleaved with standard normalization layers and residual connections.

Some models utilize multi-token prediction internally, e.g., through an architecture having a shared model trunk with multiple independent output heads, and training to predict multiple future tokens at once using, e.g., self-speculation. Multi-token prediction can provide improved sample efficiency and faster inference than single-token prediction, giving significant gains in generative benchmarks, e.g., for source code generation tasks.

In some embodiments a model employs chain-of-thought reasoning, a technique which prompts the model to output a sequence of intermediate steps to accomplish a task. In some scenarios, this technique improves the model's reasoning abilities by allowing the model to focus on solving one subtask at a time rather than the entire task problem all at once. This technique sometimes allows the model to solve problems that are otherwise not feasible for that model, and also enhances the interpretability of the model's output by showing how the model arrived at the problem solution.

Model context size limits vary, from early model limits of 4K tokens to the present size of at least 128K in many models, and even greater sizes in some at a cost of reduce attention

A language model, action model, or other machine learning model within or utilized by an enhanced system 202 is not necessarily a large language model (LLM) or a large action model (LAM) in every embodiment, but it is an LLM or an LAM in some embodiments. For present purposes, a language model or an action model is "large" if it has at least a billion parameters. For example GPT-2 (OpenAI), MegatronLM (NVIDIA), T5 (Google), Turing-NLG (Microsoft), GPT-3 (OpenAl), GPT-3.5 (OpenAI), GPT-4 (OpenAl), and LLaMA versions (Meta AI) are each a large language model (LLM) for purposes of the present disclosure, regardless of any definitions to the contrary that may be present in the industry.

Some additional examples of models one of skill will consider suitable for a given embodiment include Phi-3 (Microsoft), GPT4o (OpenAl), Gemini Pro 1.5 (Google), Gemma (Google), Claude (Anthropic), Command (Cohere), Falcon 180B (Technology Innovation Institute), DBRX (Databricks and Mosaic), and Mistral variants (Mistral). Actual inclusion or use by an embodiment depends on technical factors such as the computing requirements of the intended deployment device relative to the desired model performance, and whether multimodality is required.

Model stability is a consideration in some embodiments and some scenarios. Instability leads to inconsistency in model responses to prompts. Model stability is sometimes dependent on model parameters. Some different models have different stability parameters, and some exhibit different variability between answers to the same question even while using the same stability parameters. Some models are stabilized by adjusting parameters such as temperature, frequency penalty, presence penalty, or nucleus sampling, and also or instead by constraining the queries sent to a given instance of the model.

Small models often provide more deployment flexibility, being able to run on edge devices such as user devices when a large model would require greater computing power or memory or both than is available on the edge device, at least for acceptable performance. One measure of acceptable performance in some embodiments is to provide human interaction with acceptable performance, e.g., user interface responses in under 5 seconds for most prompts other than clip generation prompts. However, small models typically have less recall than large models, making them more suitable for narrower fields of use than large models which can perform well with a larger range of tasks.

In some scenarios, model performance is optimized by use of suitable training data, fine-tuning, prompt engineering, or a combination thereof. In some scenarios part or all of the training data is synthesized data. Microsoft ORCA, for example, focuses automated pipelines to create high-quality synthesized data for training models for specialization and model self-improvement. More generally, training is accomplished using supervised learning or semi-supervised learning, to the extent labeled data is available and effective, but some scenarios rely at least in part on unsupervised learning.

Model performance is enhanced in some embodiments by retrieval augmented generation, by filtering inputs or outputs or both for toxic or off-topic material, and/or by other quality control mechanisms.

### Internet of Things

In some embodiments, the system 202 is, or includes, an embedded system such as an Internet of Things system. "loT" or "Internet of Things" means any networked collection of addressable embedded computing or data generation or actuator nodes. An individual node is referred to as an internet of things device 101 or loT device 101 or internet of things system 102 or loT system 102. Such nodes are examples of computer systems 102 as defined herein, and may include or be referred to as a "smart" device, "endpoint", "chip", "label", or "tag", for example, and loT may be referred to as a "cyber-physical system". In the phrase "embedded system" the embedding referred to is the embedding a processor and memory in a device, not the embedding of debug script in source code.

loT nodes and systems typically have at least two of the following characteristics: (a) no local human-readable display; (b) no local keyboard; (c) a primary source of input is sensors that track sources of non-linguistic data to be uploaded from the loT device; (d) no local rotational disk storage - RAM chips or ROM chips provide the only local memory; (e) no CD or DVD drive; (f) being embedded in a household appliance or household fixture; (g) being embedded in an implanted or wearable medical device; (h) being embedded in a vehicle; (i) being embedded in a process automation control system; or (j) a design focused on one of the following: environmental monitoring, civic infrastructure monitoring, agriculture, industrial equipment monitoring, energy usage monitoring, human or animal health or fitness monitoring, physical security, physical transportation system monitoring, object tracking, inventory control, supply chain control, fleet management, or manufacturing. IoT communications may use protocols such as TCP/IP (Transmission Control Protocol/Internet Protocol), Constrained Application Protocol (CoAP), Message Queuing Telemetry Transport (MQTT), Advanced Message Queuing Protocol (AMQP), HTTP, HTTPS, Transport Layer Security (TLS), UDP, or Simple Object Access Protocol (SOAP), for example, for wired or wireless (cellular or otherwise) communication. IoT storage or actuators or data output or control may be a target of unauthorized access, either via a cloud, via another network, or via direct local access attempts.

### Note Regarding Hyperlinks

Portions of this disclosure contain URIs, hyperlinks, IP addresses, and/or other items which might be considered browser-executable codes. These items are included in the disclosure for their own sake to help describe some embodiments, rather than being included to reference the contents of the web sites or files that they identify. Applicant does not intend to have these URIs, hyperlinks, IP addresses, or other such codes be active links. None of these items are intended to serve as an incorporation by reference of material that is located outside this disclosure document. Thus, there should be no objection to the inclusion of these items herein. To the extent these items are not already disabled, it is presumed the Patent Office will disable them (render them inactive as links) when preparing this document's text to be loaded onto its official web database. See, e.g., United States Patent and Trademark Manual of Patent Examining Procedure §608.01 (VII).

### Technical Character

The technical character of embodiments described herein will be apparent to one of ordinary skill in the art, and will also be apparent in several ways to a wide range of attentive readers. Some embodiments address technical activities such as generating 228 an executable image 134, deploying 1020 an executable image 134, sending and receiving data 118 over a computer network 108, populating 1302 a data structure 218 in a computing system memory 112, configuring 1406 a computing system display 128, performing 1422 a command 436 in a computing system 102, filtering 1446 particular kinds of data 118, or normalizing 1430 a uniform resource locator 434, which are each an activity deeply rooted in computing technology. Some of the technical mechanisms discussed include, e.g., various examples of functionality 204 software and hardware 206, 222, 224, 228, 232, machine learning models 812, virtual machines 604, containers 606, systems 202, interfaces 136, and executable images 134. Some of the technical effects discussed include, e.g., improved security 524 from system 202 restrictions 832 on utilization of data 304, improved computational efficiency by departing from a kitchen sink approach to development environment 210 creation and instead automatically and proactively excluding 710 potential image 134 components 214 which correlate 1402 below a lower threshold 226, improved usability by utilization of thresholds 226 and correlation values 220 derived from historic data 304 to automatically and proactively include 708 or exclude 710 potential image 134 components instead of following a built-from-scratch approach to development environment 210 creation, and scalable improved computational efficiency from proactively including highly correlated development environment components 214 in generated development environment executable images 134 instead of repeating individual human interaction computations identifying those components for individual images. Other technical effects are also discussed herein, e.g., in the descriptions of technical benefits and technical challenges. Thus, purely mental processes and activities limited to pen-and-paper are clearly excluded from the scope of any claimed embodiment. Other advantages based on the technical characteristics of the teachings will also be apparent to one of skill from the description provided.

One of skill understands that executable image 134 composition 206, generation 1018, and deployment 1020 as described herein are each a technical activity which cannot be performed mentally at all, due to API 136 usage, network 108 usage, and practical constraints against delays and errors that arise from human interactions with a system 102. Hence, executable image 134 operational improvements such as the various examples of DEP functionality 204 described herein are improvements to computing technology generally, and improvements to the field of computational development environment configuration, which lies within the technical field of computing technology. People manifestly lack the speed, accuracy, memory capacity, and specific processing capabilities required to perform development environment 210 configuration as taught herein.

Different embodiments provide different technical benefits or other advantages in different circumstances, but one of skill informed by the teachings herein will acknowledge that particular technical advantages will likely follow from particular embodiment features or feature combinations, as noted at various points herein.

Any generic or abstract aspects of described embodiments are integrated into a practical application 122, such as Microsoft Dev Box software, GitHub CodeSpaces software, Azure DevTest Labs software, or other tools 122 for automatic configuration of a development environment. The foregoing tools 122 are examples, not a comprehensive list of all potential practical applications 122. Likewise, although some practical applications 122 contemplated herein have a focus on repositories 404, 302, practical applications 122 of the teachings provided herein are not limited to examples of tools 122 that perform automatic configuration of a development environment on the basis of historic data on correlations used by developers of a given repository, or by developers of similar repositories. Other code artifacts 302, additional code artifacts 302, or both, are also employed in some embodiments.

Some embodiments described herein may be viewed by some people in a broader context. For instance, concepts such as efficiency, reliability, user satisfaction, or waste may be deemed relevant to a particular embodiment. However, it does not follow from the availability of a broad context that exclusive rights are being sought herein for abstract ideas; they are not. In particular, no claim is made to system 102 configuration activities generally or to any system 102 configuration per se, as opposed to the particular DEP methods, systems, data structures, and configured storage devices described and claimed in the eventual final claims based on the present disclosure.

Rather, the present disclosure is focused on providing appropriately specific embodiments whose technical effects fully or partially solve particular technical problems, such as: how to improve the efficiency of environment configuration by technical improvements (e.g., systems 202, methods 1400), as opposed to administrative changes (e.g., IT administrator training in development tools, or scheduling more time in a software project for developers to configure their environments); how to optimally control the technical process of composing a development environment 210 from relatively few components 214 in a very large space of available potential components; how to balance security and privacy against the accuracy of predictions of component utility, through restrictions 832 such as anonymization, pseudonymization, masking, or filtering; and how to optimize user 104 interaction with a computing system 202 while that system is performing development environment composition and generation. Other configured storage media, systems, and processes involving efficiency, reliability, user satisfaction, or waste are outside the present scope. Accordingly, vagueness, mere abstractness, lack of technical character, and accompanying proof problems are also avoided under a proper understanding of the present disclosure.

### Additional Combinations and Variations

Any of these combinations of software code, data structures, logic, components, communications, and/or their functional equivalents may also be combined with any of the systems and their variations described above. A process may include any steps described herein in any subset or combination or sequence which is operable. Each variant may occur alone, or in combination with any one or more of the other variants. Each variant may occur with any of the processes and each process may be combined with any one or more of the other processes. Each process or combination of processes, including variants, may be combined with any of the configured storage medium combinations and variants described above.

More generally, one of skill will recognize that not every part of this disclosure, or any particular details therein, are necessarily required to satisfy legal criteria such as enablement, written description, or best mode. Also, embodiments are not limited to the particular scenarios, language models, prompts, motivating examples, operating environments, tools, peripherals, software process flows, identifiers, repositories, data structures, data selections, naming conventions, notations, control flows, data flows, or other implementation choices described herein. Any apparent conflict with any other patent disclosure, even from the owner of the present subject matter, has no role in interpreting the claims presented in this patent disclosure.

### Acronyms, abbreviations, names, and symbols

Some acronyms, abbreviations, names, and symbols are defined below. Others are defined elsewhere herein, or do not require definition here in order to be understood by one of skill.
ALU: arithmetic and logic unit
API: application program interface
BIOS: basic input/output system
CD: compact disc
CLI: command line interface, command line interpreter
CPU: central processing unit
DVD: digital versatile disk or digital video disc
FPGA: field-programmable gate array
FPU: floating point processing unit
GDPR: General Data Protection Regulation
GPU: graphical processing unit
GUI: graphical user interface
HTTPS: hypertext transfer protocol, secure
laaS or IAAS: infrastructure-as-a-service
IT: information technology
LAN: local area network
OS: operating system
PaaS or PAAS: platform-as-a-service
RAM: random access memory
ROM: read only memory
TPU: tensor processing unit
UEFI: Unified Extensible Firmware Interface
UI: user interface
WAN: wide area network

### Some Additional Terminology

Reference is made herein to exemplary embodiments such as those illustrated in the drawings, and specific language is used herein to describe the same. But alterations and further modifications of the features illustrated herein, and additional technical applications of the abstract principles illustrated by particular embodiments herein, which would occur to one skilled in the relevant art(s) and having possession of this disclosure, should be considered within the scope of the claims.

The meaning of terms is clarified in this disclosure, so the claims should be read with careful attention to these clarifications. Specific examples are given, but those of skill in the relevant art(s) will understand that other examples may also fall within the meaning of the terms used, and within the scope of one or more claims. Terms do not necessarily have the same meaning here that they have in general usage (particularly in non-technical usage), or in the usage of a particular industry, or in a particular dictionary or set of dictionaries. Reference numerals may be used with various phrasings, to help show the breadth of a term. Sharing a reference numeral does not mean necessarily sharing every aspect, feature, or limitation of every item referred to using the reference numeral. Omission of a reference numeral from a given piece of text does not necessarily mean that the content of a Figure is not being discussed by the text. The present disclosure asserts and exercises the right to specific and chosen lexicography. Quoted terms are being defined explicitly, but a term may also be defined implicitly without using quotation marks. Terms may be defined, either explicitly or implicitly, here in the Detailed Description and/or elsewhere in the application file.

A "computer system" (a.k.a. "computing system") may include, for example, one or more servers, motherboards, processing nodes, laptops, tablets, personal computers (portable or not), personal digital assistants, smartphones, smartwatches, smart bands, cell or mobile phones, other mobile devices having at least a processor and a memory, video game systems, augmented reality systems, holographic projection systems, televisions, wearable computing systems, and/or other device(s) providing one or more processors controlled at least in part by instructions. The instructions may be in the form of firmware or other software in memory and/or specialized circuitry.

A "multithreaded" computer system is a computer system which supports multiple execution threads. The term "thread" should be understood to include code capable of or subject to scheduling, and possibly to synchronization. A thread may also be known outside this disclosure by another name, such as "task," "process," or "coroutine," for example. However, a distinction is made herein between threads and processes, in that a thread defines an execution path inside a process. Also, threads of a process share a given address space, whereas different processes have different respective address spaces. The threads of a process may run in parallel, in sequence, or in a combination of parallel execution and sequential execution (e.g., time-sliced).

A "processor" is a thread-processing unit, such as a core in a simultaneous multithreading implementation. A processor includes hardware. A given chip may hold one or more processors. Processors may be general purpose, or they may be tailored for specific uses such as vector processing, graphics processing, signal processing, floating-point arithmetic processing, encryption, I/O processing, machine learning, and so on.

"Kernels" include operating systems, hypervisors, virtual machines, BIOS or UEFI code, and similar hardware interface software.

"Code" means processor instructions, data (which includes constants, variables, and data structures), or both instructions and data. "Code" and "software" are used interchangeably herein. Executable code, interpreted code, and firmware are some examples of code.

"Program" is used broadly herein, to include applications, kernels, drivers, interrupt handlers, firmware, state machines, libraries, and other code written by programmers (who are also referred to as developers) and/or automatically generated.

A "routine" is a callable piece of code which normally returns control to an instruction just after the point in a program execution at which the routine was called. Depending on the terminology used, a distinction is sometimes made elsewhere between a "function" and a "procedure": a function normally returns a value, while a procedure does not. As used herein, "routine" includes both functions and procedures. A routine may have code that returns a value (e.g., sin(x)) or it may simply return without also providing a value (e.g., void functions).

"Service" as a noun means a consumable program offering, in a cloud computing environment or other network or computing system environment, which provides resources to multiple programs or provides resource access to multiple programs, or does both. A service implementation may itself include multiple applications or other programs.

"Cloud" means pooled resources for computing, storage, and networking which are elastically available for measured on-demand service. A cloud may be private, public, community, or a hybrid, and cloud services may be offered in the form of infrastructure as a service (laaS), platform as a service (PaaS), software as a service (SaaS), or another service. Unless stated otherwise, any discussion of reading from a file or writing to a file includes reading/writing a local file or reading/writing over a network, which may be a cloud network or other network, or doing both (local and networked read/write). A cloud may also be referred to as a "cloud environment" or a "cloud computing environment".

"Access" to a computational resource includes use of a permission or other capability to read, modify, write, execute, move, delete, create, or otherwise utilize the resource. Attempted access may be explicitly distinguished from actual access, but "access" without the "attempted" qualifier includes both attempted access and access actually performed or provided.

For convenience and readability, many examples and claims herein speak of a correlation value 220 being "above" a threshold 226 or being below a threshold 226. In some mathematical terms or some programming terms, "above" corresponds to "greater than", e.g., ">". However, one of skill will acknowledge that a slight adjustment 230 of a given threshold or a given correlation value produces equivalent results using "greater than or equals", e.g., ">=", when the given threshold 226 and a given correlation value 220 are within a distance of one another that is less than the size of the adjustment. For instance, when the threshold is 0.8 and the correlation value is 0.8, the value is not greater than the threshold, but if the threshold is adjusted down to 0.799 or the value is adjusted up to 0.801, then the threshold is greater. Likewise, if "greater than" is changed to "greater than or equal" then the condition "correlation value greater than or equal to threshold" is satisfied. One of skill will also acknowledge that value comparison expressions using comparison operators such as ">", ">=" can also be rephrased to equivalent value comparison expressions which use "less than or equals" or "less than", respectively. As a practical matter, such implied adjustments are limited to at most one percent of the correlation value or at most one percent of the threshold value, or both.

In view of the foregoing, for purposes of the teachings herein and claim interpretation, these variations are meant to be understood as equivalent unless expressly stated otherwise. Thus, for a correlation value CV and an upper threshold T, "CV above T", "CV > T", "CV greater than T", "CV >= T", "CV greater than or equal to T", "T below CV", "T < CV", "T less than CV", "T under CV", "T <= CV", and "T less than or equal CV" are equivalent. They each express a comparison in which CV is effectively equal to or greater than the upper threshold T (or T minus epsilon, where epsilon is, e.g., smaller than one percent of T) and therefore the component corresponding to CV is or will be included by default in the deployment set. Similar understandings apply to comparisons of a correlation value CV and a lower threshold T, in which CV is effectively equal to or less than the lower threshold T (or T plus epsilon, where epsilon is, e.g., smaller than one percent of T) and therefore the component corresponding to CV is or will be excluded by default from the deployment set.

Herein, activity by a user refers to activity by a user device or activity by a user account or user session, or by software on behalf of a user, or by hardware on behalf of a user. Activity is represented by digital data or machine operations or both in a computing system. Activity within the scope of any claim based on the present disclosure excludes human actions per se. Software or hardware activity "on behalf of a user" accordingly refers to software or hardware activity on behalf of a user device or on behalf of a user account or a user session or on behalf of another computational mechanism or computational artifact, and thus does not bring human behavior per se within the scope of any embodiment or any claim.

"Digital data" means data in a computing system, as opposed to data written on paper or thoughts in a person's mind, for example. Similarly, "digital memory" refers to a non-living device, e.g., computing storage hardware, not to human or other biological memory.

As used herein, "include" allows additional elements (i.e., includes means comprises) unless otherwise stated.

"Optimize" means to improve, not necessarily to perfect. For example, it may be possible to make further improvements in a program or an algorithm which has been optimized.

"Process" is sometimes used herein as a term of the computing science arts, and in that technical sense encompasses computational resource users, which may also include or be referred to as coroutines, threads, tasks, interrupt handlers, application processes, kernel processes, procedures, or object methods, for example. As a practical matter, a "process" is the computational entity identified by system utilities such as Windows^{®} Task Manager, Linux^{®} ps, or similar utilities in other operating system environments (marks of Microsoft Corporation, Linus Torvalds, respectively). "Process" may also be used as a patent law term of art, e.g., in describing a process claim as opposed to a system claim or an article of manufacture (configured storage medium) claim. Similarly, "method" is used herein primarily as a technical term in the computing science arts (a kind of "routine") but it is also a patent law term of art (akin to a "method"). "Process" and "method" in the patent law sense are used interchangeably herein. Those of skill will understand which meaning is intended in a particular instance, and will also understand that a given claimed process or method (in the patent law sense) may sometimes be implemented using one or more processes or methods (in the computing science sense).

"Automatically" means by use of automation (e.g., general purpose computing hardware configured by software for specific operations and technical effects discussed herein), as opposed to without automation. In particular, steps performed "automatically" are not performed by hand on paper or in a person's mind, although they may be initiated by a human person or guided interactively by a human person. Automatic steps are performed with a machine in order to obtain one or more technical effects that would not be realized without the technical interactions thus provided. Steps performed automatically are presumed to include at least one operation performed proactively.

One of skill understands that technical effects are the presumptive purpose of a technical embodiment. The mere fact that calculation is involved in an embodiment, for example, and that some calculations can also be performed without technical components (e.g., by paper and pencil, or even as mental steps) does not remove the presence of the technical effects or alter the concrete and technical nature of the embodiment, particularly in real-world embodiment implementations. Development environment configuration operations such as obtaining 10012 code artifact IDs, getting 1006 component IDs, placing 1016 data in a deployment set data structure, generating 1018 an executable image, deploying 1020 an executable image, and many other operations discussed herein (whether recited expressly in the Figures or not), are understood to be inherently digital and computational. A human mind cannot interface directly with a CPU or other processor, or with RAM or other digital storage, to read and write the necessary data to perform the DEP steps 1400 taught herein even in a hypothetical situation or a prototype situation, much less in an embodiment's real world large computing environment, e.g., an internet-connected environment. This would all be well understood by persons of skill in the art in view of the present disclosure. Moreover, one of skill understands that DEP functionality 204 cannot be implemented merely with conventional tools and steps, because actual implementation requires the use of teachings which were first provided in the present disclosure, e.g., teachings that support the recited technical effects and technical operations.

"Computationally" likewise means a computing device (processor plus memory, at least) is being used, and excludes obtaining a result by mere human thought or mere human action alone. For example, doing arithmetic with a paper and pencil is not doing arithmetic computationally as understood herein. Computational results are faster, broader, deeper, more accurate, more consistent, more comprehensive, and/or otherwise provide technical effects that are beyond the scope of human performance alone. "Computational steps" are steps performed computationally. Neither "automatically" nor "computationally" necessarily means "immediately". "Computationally" and "automatically" are used interchangeably herein.

"Proactively" means without a direct request from a user, and indicates machine activity rather than human activity. Indeed, a user may not even realize that a proactive step by an embodiment was possible until a result of the step has been presented to the user. Except as otherwise stated, any computational and/or automatic step described herein is presumptively done proactively in at least some of the embodiments.

"Based on" means computationally based on at least, not based exclusively on. Thus, a calculation based on X depends on at least X, and may also depend on Y.

Throughout this document, use of the optional plural "(s)", "(es)", or "(ies)" means that one or more of the indicated features is present. For example, "processor(s)" means "one or more processors" or equivalently "at least one processor".

"At least one" of a list of items means one of the items, or two of the items, or three of the items, and so on up to and including all N of the items, where the list is a list of N items. The presence of an item in the list does not require the presence of the item (or a check for the item) in an embodiment. For instance, if an embodiment of a system is described herein as including at least one of A, B, C, or D, then a system that includes A but does not check for B or C or D is an embodiment, and so is a system that includes A and also includes B but does not include or check for C or D. Similar understandings pertain to items which are steps or step portions or options in a method embodiment. This is not a complete list of all possibilities; it is provided merely to aid understanding of the scope of "at least one" that is intended herein.

In claims and elsewhere herein, labels such as (a), (b), etc. in a method description are meant to aid legibility of the description, not to impose a strict order or a total ordering of actions in the method. For instance, steps labeled as (a), (b), etc. for convenience may overlap in some embodiments, or interleave in some embodiments. Step performance order may nonetheless be indicated by verb tenses, or be indicated otherwise to one of skill such as when completion of one step is a practical or prerequisite to another step.

For the purposes of United States law and practice, use of the word "step" herein, in the claims or elsewhere, is not intended to invoke means-plus-function, step-plus-function, or 35 United State Code Section 112 Sixth Paragraph / Section 112(f) claim interpretation. Any presumption to that effect is hereby explicitly rebutted.

For the purposes of United States law and practice, the claims are not intended to invoke means-plus-function interpretation unless they use the phrase "means for". Claim language intended to be interpreted as means-plus-function language, if any, will expressly recite that intention by using the phrase "means for". When means-plus-function interpretation applies, whether by use of "means for" and/or by a court's legal construction of claim language, the means recited in the specification for a given noun or a given verb should be understood to be linked to the claim language and linked together herein by virtue of any of the following: appearance within the same block in a block diagram of the figures, denotation by the same or a similar name, denotation by the same reference numeral, a functional relationship depicted in any of the figures, a functional relationship noted in the present disclosure's text. For example, if a claim limitation recited a "zac widget" and that claim limitation became subject to means-plus-function interpretation, then at a minimum all structures identified anywhere in the specification in any figure block, paragraph, or example mentioning "zac widget", or tied together by any reference numeral assigned to a zac widget, or disclosed as having a functional relationship with the structure or operation of a zac widget, would be deemed part of the structures identified in the application for zac widgets and would help define the set of equivalents for zac widget structures.

One of skill will recognize that this disclosure discusses various data values and data structures, and recognize that such items reside in a memory (RAM, disk, etc.), thereby configuring the memory. One of skill will also recognize that this disclosure discusses various algorithmic steps which are to be embodied in executable code in a given implementation, and that such code also resides in memory, and that it effectively configures any general-purpose processor which executes it, thereby transforming it from a general-purpose processor to a special-purpose processor which is functionally special-purpose hardware.

Accordingly, one of skill would not make the mistake of treating as nonoverlapping items (a) a memory recited in a claim, and (b) a data structure or data value or code recited in the claim. Data structures and data values and code are understood to reside in a computer system memory, even when a claim does not explicitly recite that residency for each and every data structure or data value or piece of code mentioned. Accordingly, explicit recitals of such residency are not required. However, they are also not prohibited, and one or two select recitals may be present for emphasis, without thereby excluding all the other data values and data structures and code from residency. Likewise, code functionality recited in a claim is understood to configure a computer system hardware processor, regardless of whether that configuring quality is explicitly recited in the claim.

Throughout this document, unless expressly stated otherwise any reference to a step in a process presumes that the step may be performed directly by a party of interest and/or performed indirectly by the party through intervening mechanisms and/or intervening entities, and still lie within the scope of the step. That is, direct performance of the step by the party of interest is not required unless direct performance is an expressly stated requirement. For example, a computational step on behalf of a party of interest, such as acquiring, anonymizing, ascertaining, assigning, calculating, communicating, composing, correlating, deploying, detecting, determining, displaying, dividing, excluding, extracting, filtering, finding, forming, gathering, generating, getting, identifying, including, masking, normalizing, obtaining, overriding, performing, placing, populating, pseudonymizing, reacting, resolving, restricting, retrieving, searching, storing, suggesting, supplementing, weighting (and acquires, acquired, anonymizes, anonymized, etc.) with regard to a destination or other subject may involve intervening action, such as the foregoing or such as forwarding, copying, uploading, downloading, encoding, decoding, compressing, decompressing, encrypting, decrypting, authenticating, invoking, and so on by some other party or mechanism, including any action recited in this document, yet still be understood as being performed directly by or on behalf of the party of interest. Example verbs listed here may overlap in meaning or even be synonyms; separate verb names do not dictate separate functionality in every case.

Some people have asserted, outside the present disclosure, that certain verbs indicate human activity, particularly human mental activity. Regardless of their accuracy in other contexts, those assertions are not a correct and accurate basis for the interpretation of any claim supported by the present disclosure, regardless of where they were made.

For example, Herman Melville's written command "Call me Ishmael" is human activity. It is not a computational routine invocation or a computing system command. It is also not a reason to interpret any claim supported by the present disclosure as a claim that can be performed mentally, or by pen and paper. Alexander Pope is correct that "A little learning is a dangerous thing". Pope refers to human learning, not computational learning, and this and other assertions about human learning do not compel interpretations of any machine learning claims herein to cover human activity. This includes, e.g., the dozens of variations of "learn" recited in the works of William Shakespeare. When the Earl of Suffolk says "A cunning man did calculate my birth" in Shakespeare's Henry VI, Part II, the calculation was not performed by a computing system, but all of the calculations claimed on the basis of the present disclosure are calculations performed in and by a computing system. Characters in Shakespeare's plays recite variations of "determine" or "estimate" dozens of times.

These particular quotes and particular authors are not representative in terms of demographics or history, but they do illustrate the point: neither these quotes nor any other reference outside the present disclosure to human acts of determining or human acts of estimating provide a legally correct basis for the interpretation of any claim supported by the present disclosure. For example, all of the determining and all of the estimating described and claimed herein are each a computational activity. These particular verbs are merely examples; different references outside the present disclosure also assert that compare, create, execute, favor, filter, initiate, notice, predict, recognize, select, and various other verbs denote human mental activity. Those assertions and other assertions outside the present disclosure are not a legally correct basis for the interpretation of any claim supported by the present disclosure.

It is well-established in patent law that proper interpretation of a claim begins with the claim itself, then looks to other claims, then seeks meaning for the claim and its limitations in view of the supporting specification, including the disclosure's text and any drawing figures, while applying the viewpoint of a person skilled in the art. To be reasonable, any claim interpretation must be consistent with the specification. Only if the meaning of claim language remains unclear after considering the claims and their supporting disclosure does it become proper to look for interpretive guidance at any use of the claim language outside the four corners of the patent application itself.

Relying on external assertions to establish that certain verbs denote human activity elsewhere and therefore also denote mental steps or other human activity within claims is legally incorrect. Such reliance is arbitrary and capricious when the specification clearly teaches that such human activity is outside the scope of the claims, as the current specification clearly teaches. Relying on such external assertions is also disrespectful of the efforts of patent practitioners and inventors to make it clear that human activity is not being claimed.

To the extent any human activity is arguably within the scope of any claim based on the present disclosure, that human activity scope is hereby expressly disclaimed and expressly disavowed. Human-machine interaction may be properly noted in a claim for context, e.g., when a claim recites that a user input is received by a computing system. But only the portion of the effective claim scope which is computational and supported herein by the description of computing hardware, interfaces, algorithms, data structures, and/or other non-human mechanisms, as understood by one of skill in the art, is retained.

Whenever reference is made to data or instructions, it is understood that these items configure a computer-readable memory and/or computer-readable storage medium, thereby transforming it to a particular article, as opposed to simply existing on paper, in a person's mind, or as a mere signal being propagated on a wire, for example. For the purposes of patent protection in the United States, a memory or other storage device or other computer-readable storage medium is not a propagating signal or a carrier wave or mere energy outside the scope of patentable subject matter under United States Patent and Trademark Office (USPTO) interpretation of the In re Nuijten case. No claim covers a signal per se or mere energy in the United States, and any claim interpretation that asserts otherwise in view of the present disclosure is unreasonable on its face. Unless expressly stated otherwise in a claim granted outside the United States, a claim does not cover a signal per se or mere energy.

Moreover, notwithstanding anything apparently to the contrary elsewhere herein, a clear distinction is to be understood between (a) computer readable storage media and computer readable memory, on the one hand, and (b) transmission media, also referred to as signal media, on the other hand. A transmission medium is a propagating signal or a carrier wave computer readable medium. By contrast, computer readable storage media and computer readable memory and computer readable storage devices are not propagating signal or carrier wave computer readable media. Unless expressly stated otherwise in the claim, "computer readable medium" means a computer readable storage medium, not a propagating signal per se and not mere energy.

An "embodiment" herein is an example. The term "embodiment" is not interchangeable with "the invention". Embodiments may freely share or borrow aspects to create other embodiments (provided the result is operable), even if a resulting combination of aspects is not explicitly described per se herein. Requiring each and every permitted combination to be explicitly and individually described is unnecessary for one of skill in the art, and would be contrary to policies which recognize that patent specifications are written for readers who are skilled in the art. Formal combinatorial calculations and informal common intuition regarding the number of possible combinations arising from even a small number of combinable features will also indicate that a large number of aspect combinations exist for the aspects described herein. Accordingly, requiring an explicit recitation of each and every combination would be contrary to policies calling for patent specifications to be concise and for readers to be knowledgeable in the technical fields concerned.

### Remarks Regarding Reference Numerals

Reference numerals are provided for convenience and in support of the drawing figures and as part of the text of the specification, which collectively describe aspects of embodiments by reference to multiple items. Items which do not have a unique reference numeral may nonetheless be part of a given embodiment. For better legibility of the text, a given reference numeral is recited near some, but not all, recitations of the referenced item in the text. The same reference numeral may be used with reference to different examples or different instances of a given item.

A list of multiple reference numerals given with an item, e.g., language similar to "item 1, 2, 3", indicates that the item is an example of a respective category associated with each listed reference numeral. For example, "laptop 101, 102" indicates that a laptop is both a machine 101 and a computing system 102. A relevant distinction in this example is that a computing system 102 contains one or more machines 101, whereas reference numeral 101 refers to a single machine, e.g., a single laptop, a single smartphone, a single workstation, a single Internet of Things device, etc. Similarly, particular kinds of data are referred to on occasion with two reference numbers, one of which is 118 indicating data generally, and the other of which refers to a particular category of data, e.g., binary code, source code, thresholds, URLs, or another data category, depending on the functionality being described. However, reference numerals for more general categories are often omitted herein for better readability, particularly when one of skill would acknowledge that the more general category encompasses a more specific category whose reference numeral is recited.

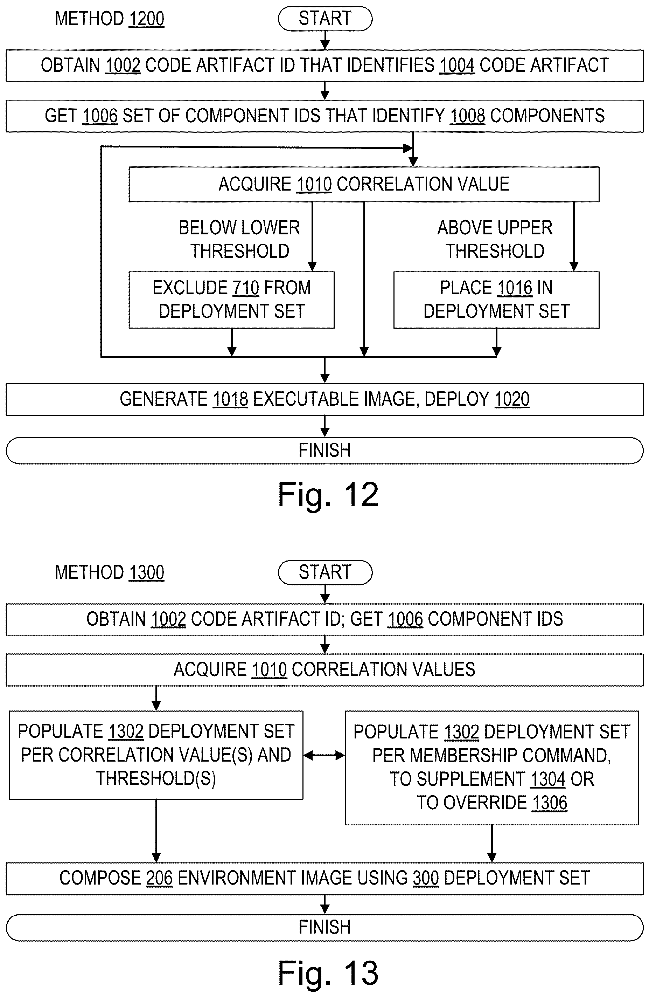

The following remarks pertain to particular reference numerals:
100 operating environment, also referred to as computing environment; includes one or more systems 102
101 machine in a system 102, e.g., any device having at least a processor 110 and having a distinct identifier such as an IP address or a MAC (media access control) address; may be a physical machine or be a virtual machine implemented on physical hardware
102 computer system, also referred to as a "computational system" or "computing system", and when in a network may be referred to as a "node"
104 users, e.g., user of an enhanced system 202
106 peripheral device
108 network generally, including, e.g., LANs, WANs, software-defined networks, clouds, and other wired or wireless networks
110 processor or non-empty set of processors; includes hardware
112 computer-readable storage medium, e.g., RAM, hard disks; also referred to as storage device
114 removable configured computer-readable storage medium
116 instructions executable with processor; may be on removable storage media or in other memory (volatile or nonvolatile or both)
118 digital data in a system 102; data structures, values, source code, and other examples are discussed herein
120 kernel(s), e.g., operating system(s), BIOS, UEFI, device drivers; also refers to an execution engine such as a language runtime
122 software tools, software applications, DEP software, security controls; hardware tools; computational
124 cloud, also referred to as cloud environment or cloud computing environment
126 display screens, also referred to as "displays"
128 computing hardware, software, or hardware-software combination that is not otherwise associated with a reference numeral 106, 108, 110, 112, 114, e.g., application program interface (API), network interface
136 interface generally, e.g., network interface card, API, user interface, or other mechanism by or through which separable items communicate in a computing system, where examples of separable include physically separable, separately compilable, separately installable, or separably replaceable without loss of functionality
202 enhanced computing system, i.e., system 102 enhanced with functionality 204 as taught herein
204 DEP functionality (also referred to as functionality 204, or using particular examples such as interactive software development tool 204 or machine learning model 204), e.g., software or specialized hardware which performs or is configured to perform steps 1010, 1016, and 1018, or steps 1010, 710 or 1016 or both, and step 1018, or steps 1010, 1302, and 1018, or steps 1302 and 206, or steps 1012, 1302, and 1018, or any software or hardware which performs or is configured to perform a sequence of development environment configuration activities first disclosed herein, or to perform a novel method 1400 first disclosed herein
300 dataflow chart, also referred to as data flow; 300 also refers to DEP methods that are illustrated by or consistent with Figure 3 or any variation of Figure 3 described herein; all data flow steps are computational, not human activity, and all data in Figure 3 is digital data in a computing system, not merely names or numbers in a human mind
1000 flowchart; 1000 also refers to DEP methods that are illustrated by or consistent with the Figure 10 flowchart or any variation of the Figure 10 flowchart described herein; all DEP method steps are computational and hence performed in and by a computing system, not human activity
1100 flowchart; 1100 also refers to DEP methods that are illustrated by or consistent with the Figure 11 flowchart or any variation of the Figure 11 flowchart described herein; all DEP method steps are computational and hence performed in and by a computing system, not human activity
1200 flowchart; 1200 also refers to DEP methods that are illustrated by or consistent with the Figure 12 flowchart or any variation of the Figure 12 flowchart described herein; all DEP method steps are computational and hence performed in and by a computing system, not human activity
1300 flowchart; 1300 also refers to DEP methods that are illustrated by or consistent with the Figure 13 flowchart or any variation of the Figure 13 flowchart described herein; all DEP method steps are computational and hence performed in and by a computing system, not human activity
1400 flowchart; 1400 also refers to DEP methods that are illustrated by or consistent with the Figure 14 flowchart, which incorporates the flowcharts of Figures 10-13, the steps implicit or express in Figures 1 through 9 and 15, and all other steps taught herein, or methods that are illustrated by or consistent with any variation of the Figure 14 flowchart described herein; all DEP method steps are computational, not human activity, and all items computed or computationally accessed in those steps are digital data in a memory 112
1456 any step or item discussed in the present disclosure that has not been assigned some other reference numeral; 1456 may thus be shown expressly as a reference numeral for various steps or items or both, and may be added as a reference numeral (in the current disclosure or any subsequent patent application which claims priority to the current disclosure) for various steps or items or both without thereby adding new matter

### Conclusion

Some embodiments provide or utilize technology to compose 206 a software development environment 210 and generate 1018 an executable image 134 according to the composition result. In examples this includes obtaining 1002 a code artifact identification 402 of a software repository 404, commit 406 level 408, project 410, file extension 418, library 412, package 414, source code pattern 422, textual description 424, or other code artifact 302, and getting 1006 development environment component identifications 216 which identify respective components 214, such as a software development tool 502, tool setting 506, tool extension 504, tool extension setting 506, security key 516, security token 520, security secret 524, runtime 928, kernel 120, driver 522, shell 526, or environment variable 528. These embodiments acquire 1010 correlation values 220 that are calculated 1012 from historic data 304 about artifact-component relationships. In response to results of comparing 1402 correlation values 220 to thresholds 226, embodiments place 1016 components 214 in a deployment set 218 as default components of the environment 210 that is being composed 206. Then these embodiments generate 1018 a deployable 1020 development environment executable image 134 from at least the deployment set 218.

Embodiments are understood to also themselves include or benefit from tested and appropriate security controls and privacy controls such as the General Data Protection Regulation (GDPR). Use of the tools and techniques taught herein can be used together with such controls.

Although Microsoft technology is used in some motivating examples, the teachings herein are not limited to use in technology supplied or administered by Microsoft. Under a suitable license, for example, the present teachings could be embodied in software or services provided by other computational service providers.

Although particular embodiments are expressly illustrated and described herein as processes, as configured storage media, or as systems, it will be appreciated that discussion of one type of embodiment also generally extends to other embodiment types. For instance, the descriptions of processes in connection with the Figures also help describe configured storage media, and help describe the technical effects and operation of systems and manufactures like those discussed in connection with other Figures. It does not follow that any limitations from one embodiment are necessarily read into another. In particular, processes are not necessarily limited to the data structures and arrangements presented while discussing systems or manufactures such as configured memories.

Those of skill will understand that implementation details may pertain to specific code, such as specific thresholds, comparisons, specific kinds of platforms or programming languages or architectures, specific scripts or other tasks, and specific computing environments, and thus need not appear in every embodiment. Those of skill will also understand that program identifiers and some other terminology used in discussing details are implementation-specific and thus need not pertain to every embodiment. Nonetheless, although they are not necessarily required to be present here, such details may help some readers by providing context and/or may illustrate a few of the many possible implementations of the technology discussed herein.

With due attention to the items provided herein, including technical processes, technical effects, technical mechanisms, and technical details which are illustrative but not comprehensive of all claimed or claimable embodiments, one of skill will understand that the present disclosure and the embodiments described herein are not directed to subject matter outside the technical arts, or to any idea of itself such as a principal or original cause or motive, or to a mere result per se, or to a mental process or mental steps, or to a business method or prevalent economic practice, or to a mere method of organizing human activities, or to a law of nature per se, or to a naturally occurring thing or process, or to a living thing or part of a living thing, or to a mathematical formula per se, or to isolated software per se, or to a merely conventional computer, or to anything wholly imperceptible or any abstract idea per se, or to insignificant post-solution activities, or to any method implemented entirely on an unspecified apparatus, or to any method that fails to produce results that are useful and concrete, or to any preemption of all fields of usage, or to any other subject matter which is ineligible for patent protection under the laws of the jurisdiction in which such protection is sought or is being licensed or enforced.

Reference herein to an embodiment having some feature X and reference elsewhere herein to an embodiment having some feature Y does not exclude from this disclosure embodiments which have both feature X and feature Y, unless such exclusion is expressly stated herein. All possible negative claim limitations are within the scope of this disclosure, in the sense that any feature which is stated to be part of an embodiment may also be expressly removed from inclusion in another embodiment, even if that specific exclusion is not given in any example herein. The term "embodiment" is merely used herein as a more convenient form of "process, system, article of manufacture, configured computer readable storage medium, and/or other example of the teachings herein as applied in a manner consistent with applicable law." Accordingly, a given "embodiment" may include any combination of features disclosed herein, provided the embodiment is consistent with at least one claim.

Not every item shown in the Figures need be present in every embodiment. Conversely, an embodiment may contain item(s) not shown expressly in the Figures. Although some possibilities are illustrated here in text and drawings by specific examples, embodiments may depart from these examples. For instance, specific technical effects or technical features of an example may be omitted, renamed, grouped differently, repeated, instantiated in hardware and/or software differently, or be a mix of effects or features appearing in two or more of the examples. Functionality shown at one location may also be provided at a different location in some embodiments; one of skill recognizes that functionality modules can be defined in various ways in a given implementation without necessarily omitting desired technical effects from the collection of interacting modules viewed as a whole. Distinct steps may be shown together in a single box in the Figures, due to space limitations or for convenience, but nonetheless be separately performable, e.g., one may be performed without the other in a given performance of a method.

Reference has been made to the figures throughout by reference numerals. Any apparent inconsistencies in the phrasing associated with a given reference numeral, in the figures or in the text, should be understood as simply broadening the scope of what is referenced by that numeral. Different instances of a given reference numeral may refer to different embodiments, even though the same reference numeral is used. Similarly, a given reference numeral may be used to refer to a verb, a noun, and/or to corresponding instances of each, e.g., a processor 110 may process 110 instructions by executing them.

As used herein, terms such as "a", "an", and "the" are inclusive of one or more of the indicated item or step. In particular, in the claims a reference to an item generally means at least one such item is present and a reference to a step means at least one instance of the step is performed. Similarly, "is" and other singular verb forms should be understood to encompass the possibility of "are" and other plural forms, when context permits, to avoid grammatical errors or misunderstandings.

Headings are for convenience only; information on a given topic may be found outside the section whose heading indicates that topic.

All claims and the abstract, as filed, are part of the specification. The abstract is provided for convenience and for compliance with patent office requirements; it is not a substitute for the claims and does not govern claim interpretation in the event of any apparent conflict with other parts of the specification. Similarly, the summary is provided for convenience and does not govern in the event of any conflict with the claims or with other parts of the specification. Claim interpretation shall be made in view of the specification as understood by one of skill in the art; it is not required to recite every nuance within the claims themselves as though no other disclosure was provided herein.

To the extent any term used herein implicates or otherwise refers to an industry standard, and to the extent that applicable law requires identification of a particular version of such as standard, this disclosure shall be understood to refer to the most recent version of that standard which has been published in at least draft form (final form takes precedence if more recent) as of the earliest priority date of the present disclosure under applicable patent law.

While exemplary embodiments have been shown in the drawings and described above, it will be apparent to those of ordinary skill in the art that numerous modifications can be made without departing from the principles and concepts set forth in the claims, and that such modifications need not encompass an entire abstract concept. Although the subject matter is described in language specific to structural features and/or procedural acts, it is to be understood that the subject matter defined in the appended claims is not necessarily limited to the specific technical features or acts described above the claims. It is not necessary for every means or aspect or technical effect identified in a given definition or example to be present or to be utilized in every embodiment. Rather, the specific features and acts and effects described are disclosed as examples for consideration when implementing the claims.

All changes which fall short of enveloping an entire abstract idea but come within the meaning and range of equivalency of the claims are to be embraced within their scope to the full extent permitted by law.

## Claims

1. A scalable method for composing a software development environment, the method performed by a computing system, the computing system comprising a processor and a memory in operable communication with the processor, the method comprising the computing system:
obtaining a code artifact identification which identifies a code artifact;
getting a nonempty set of development environment component identifications which identify respective development environment components;
for each of a plurality of the development environment component identifications, acquiring a correlation value which is calculated from at least one of: component inclusion historic data of the frequency of an inclusion of the respective development environment component with the code artifact in one or more software development environments, or component option response historic data of the frequency of a response to an option of inclusion of the respective development environment component with the code artifact in one or more software development environments;
placing in a deployment set each development environment component identification which has a respective correlation value above an upper threshold, in response to ascertaining that the respective correlation value is above the upper threshold, thereby forming a nonempty deployment set; and
generating a development environment executable image from at least the deployment set, the development environment executable image comprising multiple development environment components which have development environment component identifications in the deployment set, the development environment executable image comprising at least one executable software development tool.

2. The method of claim 1, further comprising deploying the generated development environment executable image onto at least one of: a virtual machine on a physical computer, a container in a cloud computing environment, a physical server computer, a physical workstation computer, an air-gapped computing system, a portable computing device, or an Internet of Things computing device.

3. The method of claim 1 or 2, further comprising the computing system facilitating user input to tailor the development environment executable image to a user preference, wherein facilitating comprises:
displaying in a user interface a description of a particular development environment component whose corresponding correlation value is between a lower threshold and the upper threshold, the lower threshold being above zero and less than the upper threshold;
receiving a membership command via the user interface, the membership command comprising an inclusion command or an exclusion command as to membership of the particular development environment component in the development environment; and
including or excluding the particular development environment component's identification from the deployment set according to the membership command.

4. The method of one of claims 1 to 3, wherein obtaining the code artifact identification comprises at least one of:
searching at least one of: the component inclusion historic data or the component option response historic data, the searching being subject to a code artifact category ordering which includes at least two code artifact categories; or
extracting the code artifact identification from a user-supplied command.

5. The method of one of claims 1 to 4, further comprising the computing system determining a deployment set threshold collection, the deployment set threshold collection having at least one member, the deployment set threshold collection including the upper threshold, or including a lower threshold which is above zero and is less than the upper threshold, or including both the upper threshold and the lower threshold, wherein the determining comprises at least one of:
determining that the deployment set threshold collection satisfies a statistical significance criterion in that at least one member of the deployment set threshold collection is statistically significant for at least one of: the component inclusion historic data or the component option response historic data; or
determining that the deployment set threshold collection satisfies a coverage criterion in that (a) at least a specified inclusion amount of the development environment component identifications have respective correlation values above the upper threshold, the inclusion amount being greater than zero, or (b) at least a specified nonzero exclusion amount of the development environment component identifications have respective correlation values below the lower threshold, the exclusion amount being greater than zero, or both (a) and (b).

6. The method of one of claims 1 to 5, further comprising the computing system finding a dependency which specifies that a first development environment component depends on a second development environment component, detecting an inclusion of the first development environment component's identification in the deployment set, and reacting to the dependency by at least one of:
including the second development environment component's identification in the deployment set when the second development environment component identification's correlation value is below the upper threshold; or
including the second development environment component's identification in the deployment set when the computing system is configured to receive and perform a membership command and a membership command directed at the second development environment component is absent from the computing system, wherein a given membership command directed at a given development environment component indicates whether to include the given development environment component in the development environment executable image.

7. The method of one of claims 1 to 6, wherein calculating the correlation value of a particular development environment component from the historic data comprises at least one of:
dividing a total number of occurrences of the code artifact by a number of usages of the particular development environment component in conjunction with an occurrence of the code artifact;
calculating a probability that the particular development environment component is used, given that the code artifact is present; or
submitting at least a portion of the historic data to a machine learning model and prompting the machine learning model for a numeric measure of correlation of the code artifact with the particular development environment component.

8. The method of one of claims 1 to 7, further comprising restricting at least a portion of the historic data by at least one of:
anonymizing, pseudonymizing, or masking a software developer identity or a software developer organization identity of usage data from which the historic data is derived;
filtering out non-public source code from usage data from which the historic data is derived; or
filtering out software code which is related to non-public software libraries or related to non-public software packages from usage data from which the historic data is derived.

9. A computing system configured for composing a software development environment, the computing system comprising:
a digital memory containing one or more data structures which correspond to a nonempty set of development environment component identifications which identify respective development environment components;
a processor in operable communication with the digital memory;
a deployment set data structure residing in the digital memory and having an upper threshold and a lower threshold;
a correlation value acquiror which upon execution by the processor acquires a correlation value for each of a plurality of the development environment component identifications, each correlation value calculated from at least component inclusion historic data of the frequency of an inclusion of the respective development environment component with a respective code artifact in one or more software development environments;
a deployment set populator which upon execution by the processor populates the deployment set data structure, subject to an override, to include in the deployment set data structure each development environment component identification which has a respective acquired correlation value above the upper threshold, and to exclude from the deployment set data structure each development environment component identification which has a respective acquired correlation value below the lower threshold, thereby forming a nonempty deployment set in the digital memory; and
a development environment executable image generator which upon execution by the processor generates a development environment executable image from at least the deployment set, the development environment executable image comprising the development environment components which have development environment component identifications in the deployment set, the development environment executable image comprising at least one executable software development tool.

10. The computing system of claim 9, wherein at least one respective code artifact is identified by a code artifact identification in the digital memory, which identifies at least one of: a software repository, a software repository commit level, a software project, a file extension, a software library, a software package, a pattern in a source code, or a textual description of a software repository and one or more development environment components associated with the software repository in a particular software development environment or a set of software development environments.

11. The computing system of claim 9 or 10, at least one of:
wherein at least one development environment component identification identifies at least one of: a software development tool, a software development tool setting, a software development tool extension, a software development tool extension setting, a digital security key, a digital security token, a digital security secret, a runtime software, a kernel software, a driver software, a shell software, or an environment variable of a software development environment;
wherein all of the following are performed by the computing system within a total time period which is less than one minute long: the correlation value acquiror acquires the correlation value for each of the plurality of the development environment component identifications, the deployment set populator populates the deployment set data structure, and the development environment executable image generator generates the development environment executable image;
wherein a uniform resource locator identifies a particular development environment component or identifies a particular code artifact, and wherein the computing system further comprises a uniform resource locator normalizer which upon execution by the processor normalizes the uniform resource locator;
further comprising a deployment set threshold determination means for determining at least one threshold of the deployment set data structure; and
further comprising an image deployer which upon execution by the processor deploys the generated development environment executable image to a development environment computer.

12. A computer-readable storage medium configured with data and instructions which upon execution by a processor of a computing system perform a method for composing a software development environment, the method comprising:
obtaining a code artifact identification which identifies a code artifact;
getting a nonempty set of development environment component identifications which identify respective development environment components;
for each of a plurality of the development environment component identifications, acquiring a correlation value which is calculated from at least one of: component inclusion historic data of the frequency of an inclusion of the respective development environment component with the code artifact in one or more software development environments, or component option response historic data of the frequency of a response to an option of inclusion of the respective development environment component with the code artifact in one or more software development environments;
placing in a deployment set each development environment component identification which has a respective correlation value above an upper threshold, thereby forming a nonempty deployment set;
marking for exclusion from the deployment set each development environment component identification which has a respective correlation value below a lower threshold, the lower threshold being less than the upper threshold; and
generating a development environment executable image from at least the deployment set, the development environment executable image comprising at least one development environment component which has a respective development environment component identification in the deployment set, the development environment executable image excluding at least one development environment component which has a respective development environment component identification marked for exclusion, the development environment executable image comprising at least one executable software development tool which includes at least one of: a compiler, a static analysis tool, a source code editor, a debugger, or a performance profiler.

13. The computer-readable storage medium of claim 12, at least one of:
wherein the method further comprises receiving a repository cloning command, and wherein the placing, marking, and generating are performed in response to at least the repository cloning command; and
wherein calculating the correlation value of a particular development environment component from the historic data comprises weighting at least one item of the historic data according to a relevance metric.

14. The computer-readable storage medium of claim 12 or 13, comprising at least one of:
calculating at least one correlation value from both component inclusion historic data and component option response historic data; or
resolving a conflict between development environment components.

15. The computer-readable storage medium of one of claims 12 to 14, wherein:
obtaining the code artifact identification comprises extracting the code artifact identification from a user-supplied command, and the code artifact identification includes or represents a user-supplied natural language description of at least a portion of the development environment; and
acquiring the correlation value comprises correlating at least a portion of the user-supplied natural language description with an artificially-created natural language description of at least a portion of the development environment.
